# EUROPEAN PATENT SPECIFICATION

(11) **EP 3 425 033 B1**
(45) Date of publication and mention of the grant of the patent: **21.01.2026**
(21) Application number: 17760023.6
(22) Date of filing: 28.02.2017
(51) Int. Cl.: C11B 5/00, A23D 7/00, C09K 15/00, A23D 7/005, A23D 7/01

(54) **FAT OR OIL COMPOSITION EXHIBITING ANTI-OXIDATION PROPERTIES**
FETT- ODER ÖLZUSAMMENSETZUNG MIT ANTIOXIDATIVEN EIGENSCHAFTEN
COMPOSITION DE GRAISSE OU D'HUILE PRÉSENTANT DES PROPRIÉTÉS ANTI-OXYDATION

(30) Priority: 02.03.2016 WO PCT/JP2016/056457; 09.06.2016 JP 2016115392
(43) Date of publication of application: 09.01.2019
(73) Proprietor: Fuji Oil Co., Ltd., Izumisano-shi, Osaka 598-8540 (JP)
(72) Inventor: KATO, Masaharu, Tsukubamirai-shi Ibaraki 300-2436 (JP); MORIKAWA, Miwako, Tsukubamirai-shi Ibaraki 300-2436 (JP); SUGIYAMA, Masahiro, Tsukubamirai-shi Ibaraki 300-2436 (JP)
(74) Representative: Loyer & Abello
(86) International application number: PCT/JP2017/007906
(87) International publication number: WO 2017/150558

(56) References cited:
- EP-A1- 1 564 278
- WO-A1-00/39248
- WO-A1-2009/013757
- JP-A- 2002 142 673
- JP-A- H0 584 436
- JP-A- S6 312 697
- JP-A- S62 153 385
- US-A- 5 084 289
- RIISOM T ET AL: "EFFECT OF AMINO-ACIDS ON THE AUT OXIDATION OF SAFFLOWER OIL IN EMULSIONS", JOURNAL OF THE AMERICAN OIL CHEMISTS' SOCIETY (JAOCS), SPRINGER, DE, vol. 57, no. 10, 1 January 1980 (1980-01-01), pages 354 - 359, XP002547015, ISSN: 0003-021X, DOI: 10.1007/BF02662057
- MONICA MOSCA ET AL: "Biocompatible Water-in-Oil Emulsion as a Model to Study Ascorbic Acid Effect on Lipid Oxidation", JOURNAL OF PHYSICAL CHEMISTRY PART B, vol. 112, no. 15, 1 April 2008 (2008-04-01), US, pages 4635 - 4641, XP055414959, ISSN: 1520-6106, DOI: 10.1021/jp710120z

## Description

### Technical Field

The present invention relates to an antioxidant oil and fat composition with high antioxidative activity comprising food or food additives, and to the production method thereof.

### Background Art

The addition of a water-soluble antioxidant to oil and fat has been known to achieve an oxidation-preventing effect (Patent Literature (PTL) 1).

PTL 2 discloses oil and fat comprising water-soluble tea polyphenol and an emulsifier, and having oxidative stability.

PTL 3 discloses that the antioxidative activity of chlorogenic acids with a specific composition is improved with a further addition of a sugar.

PTL 4 discloses a tea extract-containing oily composition for deodorization and anti-oxidization comprising a solid phase containing a tea extract and an oil phase containing an oil component and an emulsifier with an HLB of 10 or less, the solid phase being dispersed in the oil phase, wherein the tea extract-containing solid phase comprises fine particles having an average particle size of 5 µm or less, and wherein the content of water or alcoholic aqueous solution in the solid phase is 30 wt% or less.

PTL 5 discloses an oil-soluble antioxidant comprising a water-soluble antioxidant component derived from a natural product and having an average particle size of 40 to 120 nm, the oil-soluble antioxidant being transparently dispersible in oil and fat.

PTL 6 discloses a lipophilic antioxidant obtained by emulsifying gallic acid, a water-soluble antioxidant, and an oil-soluble antioxidant into a water-in-oil type emulsion with a lipophilic emulsifying agent.

PTL 7 discloses an oil and fat composition comprising (A) 0.0001 to 1 part by weight of ascorbic acid and/or a salt thereof and (B) 0.0001 to 1 part by weight of at least one member selected from citric acid, citric acid salts, malic acid, and malic acid salts, per 100 parts by weight of oil and fat.

PTL 8 discloses the antioxidative effects of rosmarinic acid and its derivatives in an oil and water composition containing 85% by weight of soybean oil, 5% of PGPR emulsifier, 10% of water and antioxidant (0.1 or 0.02%).

PTL 9 discloses a method for inhibiting the oxidation of edible oils and fats by forming a reverse micelle by admixing a mixture of an aqueous solution containing a water-soluble antioxidant with a surfactant and said oils or fats.

TBHQ (tertiary butylhydroquinone) has been reported to serve as a strong synthetic antioxidant (Non-patent Literature (NPL) 1), and can be used as an index in screening for a novel antioxidant (NPL 2).

NPL 3 discloses an oil and fat composition comprising 25% of Safflower oil, 1% of Sodium stearoyl lactylate (SSL), 1% of Distilled monoglycerides and 72% of Water phase. NPL 4 discloses an oil and fat composition comprising an antioxidant oil and fat composition containing water and ascorbic acid as antioxidant.

### Citation List

### Patent Literature

PTL 1: WO2001/096506
PTL 2: WO2013/172348
PTL 3: JPH09-143465A
PTL 4: JP2000-229118A
PTL 5: JP2013-159730A
PTL 6: JP2002-142673A
PTL 7: JPH09-235584A
PTL 8: WO 00/39248 A1
PTL 9: US 5 084 289 A

### Non-patent Literature

NPL 1: J Am Oil Chem Soc, Vol. 58, No. 3, pp. 275-278 (1981, 03) NPL 2: LWT Food Sci Technol, Vol. 41, No. 5, pp. 816-825 (2008, 06)
NPL 3: Riisom T et AL: "Effect of amino-acids on the Autoxidation of Safflower Oil in emulsions », journal of the American oil chemists'Society (JAOCS), Springer, DE, vol.57, no.10, 1 january 1980 (1980-01-01), pages 354-359.
NPL 4: Monica Mosca et AL: "Biocompatible Water-in-Oil Emulsion as a Model to Study Ascorbic Acid Effect on Lipid Oxidation", Journal Of Physical Chemistry Part B, vol. 112, no. 15, 1 April 2008 (2008-04-01), pages 4635-4641.

### Summary of Invention

### Technical Problem

An object of the present invention is to provide, using a simple method, an antioxidant oil and fat composition with unprecedentedly strong oxidative stability. This antioxidant oil and fat composition desirably maintains its effect for a long period of time.

### Solution to Problem

The use of the technique disclosed in PTL 1 or PTL 2 makes it possible to obtain oil and fat with oxidative stability that has been improved to some extent.

However, PTL 1 basically discloses oil and fat for frying, and a certain amount or more of water is not assumed to be contained in the oil and fat. In fact, PTL 1 nowhere suggests an effect on polyunsaturated fatty acid-containing oil and fat, which are far more susceptible to oxidative deterioration than oil and fat for frying.

Similar to PTL 1, PTL 2 also discloses oil and fat that are preferably used for cooking with heat, e.g., for frying, and a certain amount or more of water is not assumed to be contained in the oil and fat. Further, PTL 2 nowhere suggests an effect on polyunsaturated fatty acid-containing oil and fat.

In terms of PTL 3, since chlorogenic acids with a specific composition must be used, the versatility was low. Further, the antioxidant of PTL 3 is basically water-soluble; therefore, the use thereof as an agent for preventing oxidation of oil and fat is difficult. PTL 3 nowhere suggests achieving extremely strong antioxidative activity in oils and fats, which is an object of the present invention.

In PTL 4, dehydration is substantially performed to obtain a tea extract as a solid, which is dispersed in oil. PTL 4 nowhere suggests an oxidation-preventing effect that is strong enough to prevent oxidation of PUFA oils.

Examples in PTL 5 show many restrictions such that the antioxidant is substantially limited to catechins, and that it is necessary to use a water-soluble emulsifier. Moreover, the antioxidative activity achieved is less than 1.5 times that of the control oil (corn oil); thus, it could hardly be believed possible to impart oxidative stability to polyunsaturated fatty acid-containing oil and fat, which have much lower oxidative stability than that of corn oil.

In PTL 6, the use of gallic acid and an oil-soluble antioxidant is essential, which makes the preparation complicated. Further, the evaluation performed in PTL 6 is only with respect to lard. Thus, the effect on polyunsaturated fatty acid-containing oil and fat, which have much lower oxidative stability than that of lard, cannot be expected.

Some of the Examples in PTL 6 use glucose. According to PTL 6, however, the use of glucose is only for expectation of obtaining the effect of a sugar-amino reaction product; PTL 6 nowhere suggests that the presence of a sugar itself improves the effect of water-soluble antioxidant.

In PTL 7, it is essential to use at least one of citric acid, citrates, malic acid, or malates; and this may adversely affect the flavor, depending on the amount used. Although the specification discloses using a sugar alcohol or liquid sugar as a solvent for emulsification to obtain a water-in-oil product, the sugar alcohol or liquid sugar is nowhere used in the Examples, and the effects thereof are nowhere disclosed.

Although TBHQ is known to serve as a strong antioxidant, the use thereof for food is not currently approved in Japan. It is presumed that a substance having antioxidative activity greater than that of TBHQ is actually required to further improve the oxidative stability of oil and fat that contain a large amount of polyunsaturated fatty acids. As a matter of course, such a substance must be able to be used as food.

In view of the related art, although some antioxidative activity was declared, only limited antioxidative activity was actually demonstrated, and no substance existed that showed antioxidative activity high enough to impart oxidative stability to oils with low stability, such as polyunsaturated fatty acid-containing oils and fats. Thus, it appeared impossible to further improve the antioxidative activity in this field.

Nevertheless, the present inventors further conducted extensive research to consequently find that an antioxidant oil and fat composition shows an extremely strong oxidation stabilizing effect, the antioxidant oil and fat composition comprising an aqueous phase containing a water-soluble antioxidant and a carbohydrate, and having a certain degree or more of water-soluble solids content, the aqueous phase being dispersed in an oil phase, wherein the antioxidant oil and fat composition contains a certain amount of water. The present invention has thus been accomplished.

More specifically, the present invention relates an antioxidant oil and fat composition as claimed in claim 1 and the different embodiments are as claimed in the dependent claims of claim 1.

The present invention also relates to a method for producing an antioxidant oil and fat composition as claimed in claim 6 and the different embodiments are as claimed in the dependent claims of claim 6.

### Advantageous Effects of Invention

The present invention provides an antioxidant oil and fat composition with extremely high antioxidative activity using general-purpose edible starting materials. The invention also provides a polyunsaturated fatty acid-containing oil and fat etc. with high oxidative stability using the antioxidant oil and fat composition.

### Description of Embodiments

The antioxidant oil and fat composition according to the present invention has high antioxidative activity. The antioxidant oil and fat composition according to the present invention can be used by only mixing with a target to which antioxidative activity is intended to be imparted. The antioxidant oil and fat composition according to the present invention is an oil and fat composition in the form of water-in-oil emulsion. Thus, for use with oils and fats, the antioxidant oil and fat composition according to the present invention can be easily dispersed in the oils and fats.

The target oils and fats to be used may be any oils and fats, as long as they contain unsaturated fatty acids. The antioxidant oil and fat composition according to the present invention can thus also be used to improve the stability of commonly used oils and fats, such as soybean oil and rapeseed oil. Additionally, as the antioxidant oil and fat composition according to the present invention is used with oil and fat containing fatty acids with multiple unsaturated bonds, i.e., PUFA, the antioxidant oil and fat composition according to the present invention demonstrates remarkable performance, leading to preferable results. In the present invention, docosahexaenoic acid may be sometimes abbreviated as "DHA," and eicosapentaenoic acid may be sometimes abbreviated as "EPA." Further, in the present invention, oil and fat containing large amounts of DHA and EPA may be sometimes simply referred to as "PUFA oils."

The effect in terms of the oxidative stability of the antioxidant oil and fat composition according to the present invention is evaluated by adding a predetermined amount of the antioxidant oil and fat composition to predetermined oil and fat, storing the resulting mixture at a constant temperature, and measuring its peroxide value (POV). Suppression of the increase in the POV for a longer period of time represents higher oxidative stability. A specific measurement method is described in the Examples; the test is an accelerated test, which is performed at a temperature higher than the temperature in expected use, and so stirring is required.

The POV is denoted in "meq/kg." In the present invention, when the term "POV" is simply stated, the unit thereof is meq/kg.

A CDM test, which involves a simple measurement method, can also provide a certain evaluation index. The term "CDM" (a Conductometric Determination Method) as used herein refers to a value (time) that represents the oxidative stability of oil and fat, and the value can serve as an index for evaluation of oxidative stability. When a higher CDM value (time) is measured, the oxidative stability is more excellent.

The CDM test can be performed using a dedicated test device "Rancimat." In terms of this method as well, a specific measurement method is described in the Examples. This test is an accelerated test, which is performed at a temperature higher than the temperature in expected use, and involves a measurement method comprising bubbling air; thus, the results are presented under stirring conditions. The antioxidant oil and fat composition according to the present invention, which contains a certain degree of water, is measured at 96°C, rather than 120°C, which is a commonly applied measurement temperature.

The numerical values obtained as a result of the CDM test are denoted as time (hr). In the present invention, the unit of a simple expression such as "a CDM value" is also time (hr).

The water-soluble antioxidant as used herein is an antioxidant that is soluble in water and is at least one member selected from vitamin C, an amino acid, or catechin. Specific examples include vitamin C (in this specification, sometimes abbreviated as "VC"), catechin, tea extracts and amino acids; with vitamin C, tea extracts, and amino acids being preferable; and vitamin C and amino acids being more preferable.

Of amino acids, it is preferable to use at least one amino acid selected from glycine, glutamic acid, alanine, proline, lysine, tryptophan, methionine, valine, serine, histidine, isoleucine, leucine, phenylalanine, arginine, threonine, cysteine, aspartic acid, glutamine, or asparagine. It is more preferable to use at least one amino acid selected from glycine, glutamic acid, alanine, proline, lysine, tryptophan, methionine, valine, serine, histidine, isoleucine, leucine, or phenylalanine; and it is even more preferable to use at least one amino acid selected from glycine, glutamic acid, alanine, proline, lysine, tryptophan, or methionine.

It is also possible to add the water-soluble antioxidant as a salt. For example, sodium glutamate may be added instead of glutamic acid, and sodium aspartate may be added instead of aspartic acid. In a similar manner, sodium ascorbate may be used instead of vitamin C.

In the present invention, even when the term "water-soluble antioxidant" or "amino acid" is simply used, the scope of these terms also encompass salts thereof.

In the present invention, these water-soluble antioxidants may be used alone or in combination by suitably selecting from the above. With the use of an appropriate water-soluble antioxidant, an antioxidant oil and fat composition that has strong antioxidative activity can be obtained.

In tea extracts, catechin is said to be the main cause of this activity. Thus, even when a tea extract is used, the tea extract may be referred to as "catechin." Catechin and tea extracts may also be collectively referred to as "polyphenols."

Needless to say, the term "water-soluble antioxidant" as used herein is not limited to encompass those that have been known as water-soluble antioxidants, but also encompasses water-soluble components that were newly found to have antioxidative activity. For amino acids, in particular, those that were newly found to have antioxidative activity by this study are also encompassed.

The present invention is characterized by achieving antioxidative activity with the use of vitamin C, which is approved for use in many countries and whose safety have been confirmed through long eating experience, the antioxidative activity being greater than that achieved with the use of synthetic antioxidants.

In the present invention, the amount of the water-soluble antioxidant contained in the aqueous phase is 2.5 to 65 wt%, preferably 10 to 63 wt%, and more preferably 13 to 60 wt%. The use of an appropriate water-soluble antioxidant in an appropriate amount makes it possible to obtain an antioxidant oil and fat composition having strong antioxidative activity.

The aqueous phase in the present invention is a mixture of water and starting materials that are water-soluble from among the starting materials of the antioxidant oil and fat composition.

The amount of the aqueous phase in the antioxidant oil and fat composition according to the present invention must be within a range of 1 to 38 wt%, preferably 3 to 34 wt%, and more preferably 5 to 30 wt%. With an appropriate amount of the aqueous phase, the antioxidant oil and fat composition according to the present invention exerts strong antioxidative activity.

In the present invention, the aqueous phase with a higher water-soluble solids content achieves more preferred antioxidative activity. In the present invention, the water-soluble solids content in the aqueous phase is 18 to 79 wt%, preferably 30 to 79 wt%, and more preferably 35 to 79 wt%. The water-soluble solids content here includes the amount of the water-soluble antioxidant.

Various materials that can be used as food or food additives may be used as water-soluble solids, in addition to the water-soluble antioxidants. In particular, carbohydrates, which are inexpensive and have an effect of further increasing antioxidative activity, are preferable. The carbohydrate is preferably at least one member selected from sugar alcohols, oligosaccharides, various monosaccharides, such as glucose, various disaccharides, such as sucrose and maltose, or dextrins; more preferably a sugar alcohol, glucose, sucrose, dextrins, or maltose; and even more preferably sucrose or a sugar alcohol.

Of sugar alcohols, preferred are glycerol, maltitol, sorbitol, erythritol, reduced palatinose, lactitol, xylitol, and mannitol, more preferred are glycerol, maltitol, sorbitol, and erythritol, and even more preferred are sorbitol and erythritol.

Adjusting the water-soluble solids content in the aqueous phase to an appropriate value by using an appropriate carbohydrate or, as necessary, two or more appropriate carbohydrates makes it possible to prevent the occurrence of precipitation, and obtain an antioxidant oil and fat composition having strong antioxidative activity.

The oil phase as used in the present invention is obtained by dissolving in oil one or more oil-soluble components from among the starting materials of the antioxidant oil and fat composition according to the present invention. Here, examples of usable oils include soybean oil, rapeseed oil, fractionated palm oil, polyunsaturated fatty acid-containing oils and fats, and other various edible oils and fats. From the viewpoint of the production process, however, it is more advantageous to use soybean oil or the like as the oil and fat used at this stage, and use the prepared antioxidant oil and fat composition by mixing with polyunsaturated fatty acid-containing oil and fat. If the starting materials include no oil-soluble components other than oil, then the oil itself is referred to as an oil phase.

An oil-soluble emulsifier is optionally used as an oil-soluble component as a starting material in the present invention. In the present invention, emulsifiers having an HLB of 7 or less and lecithins are defined as oil-soluble emulsifiers. The oil-soluble emulsifier is preferably at least one member selected from polyglycerol esters, sugar esters, sorbitan esters, monoglycerol fatty acid esters, or lecithins. The oil-soluble emulsifier is more preferably a polyglycerol ester, a sugar ester, a distilled monoglyceride, or a lecithin, particularly preferably a polyglycerol ester, and most preferably a polyglycerol condensed ricinoleic acid ester (polyglycerol ester of polyricinoleic acid). The term "polyglycerol condensed ricinoleate (polyglycerol polyricinoleate)" may be abbreviated as "PGPR."

The amount of the oil-soluble emulsifier contained in the antioxidant oil and fat composition is preferably 0.7 to 9 times, more preferably 0.7 to 6.8 times, and even more preferably 0.7 to 5 times the weight amount of the water. The use of an appropriate oil-soluble emulsifier in an appropriate amount as required can provide an antioxidant oil and fat composition having strong antioxidative activity.

In the antioxidant oil and fat composition according to the present invention, the aqueous phase with a particle size of 300 nm or less is dispersed in the oil phase. The particle size is more preferably 160 nm or less, and even more preferably 130 nm or less.

Adjusting the particle size to an appropriate value makes it possible to stably achieve strong antioxidative activity. The occurrence of precipitation indicates that the particle size is greater than 300 nm. This means that precipitation should not be visually observed. When no precipitation occurs, it is confirmed that the particle size is 300 nm or less. Therefore, in the Examples in which precipitation does not occur, the particle size is shown as 300 nm or less.

In the present invention, the particle size is measured using the following device under the following conditions.
Device name: Zetasizer Nano S; Manufacturer: Malvern
The measurement is performed by diluting 10 µl of an oil and fat composition to be measured in 2 ml of hexane.

(The measurement results of the sample on the first day after preparation are used for evaluation.)
Temperature: 20.0°C
Equilibrium time: 240 seconds
Cell: Glass cell
Measurement angle: 173°
Positioning method: Optimum position selected
Selection of automatic attenuation: Yes

The antioxidant oil and fat composition according to the present invention has a water content of 0.5 to 18 wt%. The water content is more preferably 1 to 15 wt%, and even more preferably 1.5 to 13 wt%.

An appropriate amount of water prevents precipitation from occurring in the antioxidant oil and fat composition, and enables an achievement of high antioxidative activity. Needless to say, the water refers to water that is incorporated from the aqueous phase.

In the present invention, the antioxidant oil and fat composition described above is mixed with unsaturated fatty acid-containing oil and fat to give an unsaturated fatty acid-containing oil and fat composition having antioxidative activity.

The amount of antioxidant oil and fat composition contained in the unsaturated fatty acid-containing oil and fat composition is preferably 0.1 to 100 wt%, more preferably 3 to 95 wt%, and even more preferably 5 to 91 wt%. Incorporation of an appropriate amount of the antioxidant oil and fat composition can achieve preferable antioxidative activity.

The oil and fat used in the preparation of the antioxidant oil and fat composition contains unsaturated fatty acid-containing oil and fat, and the antioxidant oil and fat composition is equal to the unsaturated fatty acid-containing oil and fat composition. That is, the amount of the antioxidant oil and fat composition contained in the unsaturated fatty acid-containing oil and fat composition is 100 wt%.

In the present invention, the antioxidant oil and fat composition according to the present invention containing the water-soluble antioxidant at a higher concentration tends to achieve greater antioxidative activity. Specifically, in systems in which the same amount of water-soluble antioxidant is used in PUFA oil, the antioxidative activity tends to become higher with a small amount of the antioxidant oil and fat composition that contains a large amount of water-soluble antioxidant, rather than with a large amount of the antioxidant oil and fat composition that contains a small amount of water-soluble antioxidant.

The antioxidant oil and fat composition according to the present invention contains the water-soluble antioxidant at a concentration of preferably 1 to 25 wt%, more preferably 2 to 15 wt%, and most preferably 3.5 to 7 wt%. When the concentration is adjusted to be within the preferred range, preferable antioxidative activity can be obtained.

In the present invention, the amount of DHA and EPA in the unsaturated fatty acid-containing oil and fat composition is preferably 0.1 to 60 wt%, more preferably 1 to 50 wt%, and even more preferably 5 to 40 wt%.

Incorporation of appropriate amounts of DHA and EPA makes it possible to obtain an unsaturated fatty acid-containing oil and fat composition with promising physiological effects etc.

Hereafter, examples of the method for preparing an antioxidant oil and fat composition according to the present invention are described.

In the present invention, a water-soluble antioxidant and a carbohydrate are dissolved in water to prepare an aqueous phase. Here, these components must be contained in the aqueous phase in a substantially dissolved state. The determination of whether these components are substantially dissolved is made by introducing 5 ml of the aqueous phase into a 20-ml centrifugal tube, followed by centrifugal separation (3000 x g, 1 minute) at 20°C. If no precipitate is visually observed even after this process, the components are determined as being substantially dissolved. In the present invention, the expression such as "contained in the aqueous phase" means "being present in the aqueous phase in the dissolved state."

If precipitate is observed in the aqueous phase, it is possible that the antioxidant oil and fat composition does not have high antioxidative activity.

The oil phase is prepared by dissolving one or more oil-soluble components in oil and fat. In the present invention, an oil-soluble emulsifier is optionally used as an oil-soluble component.

Subsequently, the oil phase and the aqueous phase are mixed and emulsified to give an oil and fat composition in the form of water-in-oil emulsion. To perform emulsification here, a commonly used emulsifying device is used to thus easily obtain a preferable antioxidant oil and fat composition. Specific examples of usable emulsifying device include a high-pressure homogenizer, an ultrasonic emulsifying device, and a two-component impingement-type emulsifying device, which is also called a wet-jet mill. The use of an appropriate emulsifying device makes it possible to obtain a predetermined antioxidant oil and fat composition. Emulsification with the use of a high-pressure homogenizer is commonly performed at 30 to 40 MPa and 10 to 30 passes.

The use of a commonly used emulsifying device can easily reduce the particle size; this possibly relates to the fact that the aqueous phase contains a high degree of water-soluble solids in the dissolved state.

In the present invention, emulsification is performed using an appropriate emulsifying device so that the particle size becomes 300 nm or less. The particle size is more preferably 160 nm or less, and even more preferably 130 nm or less. Adjusting the particle size to below a certain degree makes it possible to obtain a preferable antioxidant oil and fat composition, in terms of the antioxidative activity and its stability.

In the present invention, it is preferable to dehydrate a portion of water after emulsification. The method for dehydration is not limited, and dehydration may be performed by bubbling gas or under reduced pressure. For dehydration, partial dehydration of 12 to 76 wt%, and more preferably 20 to 67 wt%, of water contained in the prepared emulsified product is preferred. By performing appropriate partial dehydration, an antioxidant oil and fat composition having strong antioxidative activity is obtained. Further, by performing appropriate partial dehydration, the occurrence of precipitation can be delayed, whereby the commodity value is improved.

The precipitation is believed to be caused by the primary action of the antioxidant oil and fat composition; thus, when precipitation occurs, it is believed to be impossible to achieve antioxidative activity without stirring. If continuous stirring is required to achieve high antioxidative activity, the use thereof is very difficult. Thus, no precipitation preferably occurs in the antioxidant oil and fat composition according to the present invention.

Even after partial dehydration is performed, the antioxidant oil and fat composition according to the present invention contains a certain amount of water. Therefore, it could be difficult to use oil and fat containing the antioxidant oil and fat composition as oil and fat for cooking with heat, such as for frying.

More specifically, the antioxidant oil and fat composition according to the present invention is particularly suitably used for stabilizing polyunsaturated fatty acid-containing oil and fat, such as PUFA oils.

The Examples are described below.

For the "sugar powder" in the formulations, pulverized sugar was used.

### Examples

### Study 1

Samples of formulations shown in Table 1-1 were prepared in accordance with the "Method for preparing an antioxidant oil and fat composition (study 1)."

The obtained samples were evaluated by the "Method of evaluation of oxidative stability based on CDM (study 1)." Table 1-2 shows the results.

In this study, although an actual measurement of the particle size with the use of a device was not performed after the emulsifying operation, because it was visually confirmed that precipitation etc. did not occur, the particle sizes were all considered to be 300 nm or less.

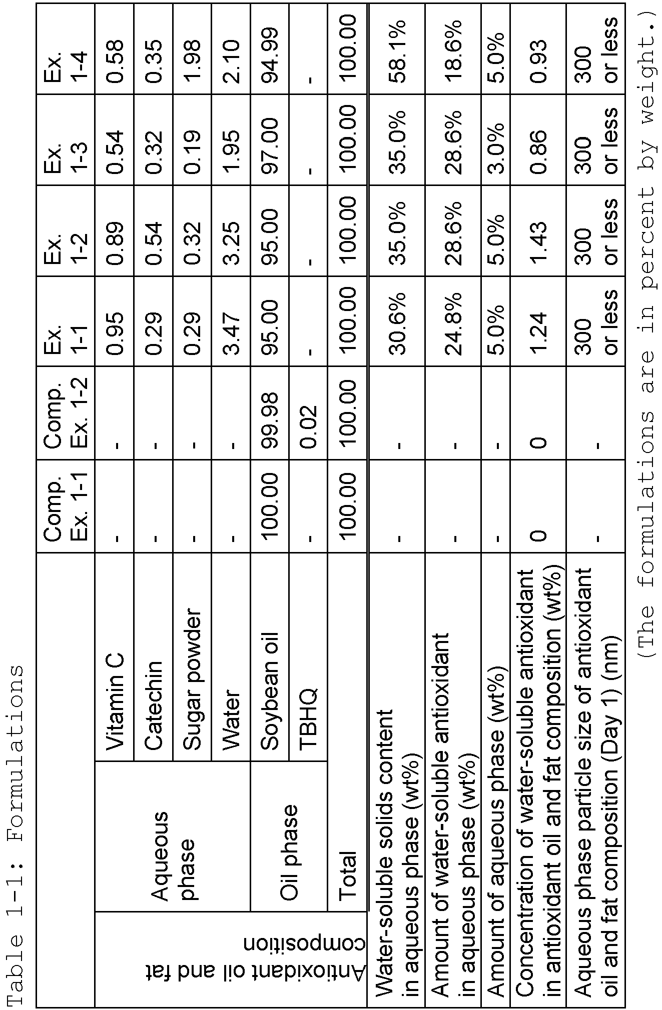

- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For TBHQ, a product of Amalfi (Product Number 3015200) was used.
- Precipitation was not observed in all of the aqueous phase prepared in accordance with the formulations.

### Method for preparing an antioxidant oil and fat composition (study 1)

1. In accordance with the formulations, the aqueous phase components were dissolved in water.
2. In accordance with the formulations, the oil phase components were dissolved in oil.
3. The aqueous phase was introduced into the oil phase, and the mixture was mixed using a homomixer.
4. Further, the resulting mixture was emulsified using a high-pressure homogenizer (37 MPa, 20 passes) to obtain a water-in-oil emulsified product as a sample.

### Method of evaluation of oxidative stability based on CDM (study 1)

1. Each sample was added to fish oil containing DHA (20.0%) and EPA (5.7%) such that the ratio of sample:fish oil = 1:9, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. The samples that had a CDM value equal to or greater than that of Comparative Example 1-2 were evaluated as pass.

**Table 1-2: Results**

| | Comp. Ex. 1-1 | Comp. Ex. 1-2 | Ex. 1-1 | Ex. 1-2 | Ex. 1-3 | Ex. 1-4 |
|---|---|---|---|---|---|---|
| CDM value (hr) | 5.0 | 8.8 | 9.7 | 10.6 | 10.5 | 11.8 |
| Pass/Fail | Fail | - | Pass | Pass | Pass | Pass |

### Discussion

The results revealed that the addition of the prepared antioxidant oil and fat compositions of predetermined formulations greatly improved the oxidative stability of fish oil. The improving effect was greater than that of TBHQ.

### Study 2(1): Type of oil-soluble emulsifier

Samples of formulations shown in Table 2-1 were prepared in accordance with the "Method for preparing an oil and fat composition (study 2)."

The obtained samples were evaluated by the "Method of evaluation of oxidative stability based on POV (study 2)." Table 2-2 shows the results.

In this study as well, an actual measurement of the particle size with the use of a device was not performed after the emulsifying operation; however, because it was visually confirmed that precipitation etc. did not occur in the samples of the Examples, the particle sizes in the Examples were all considered to be 300 nm or less.

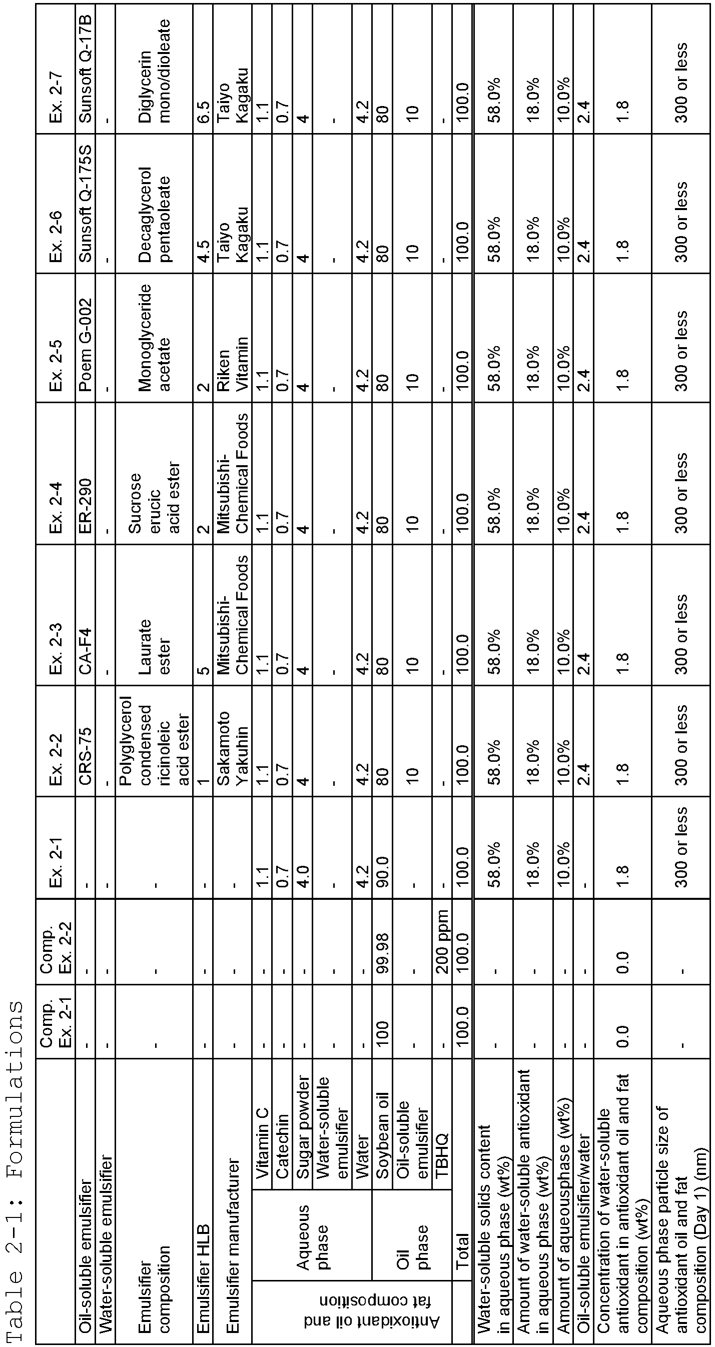

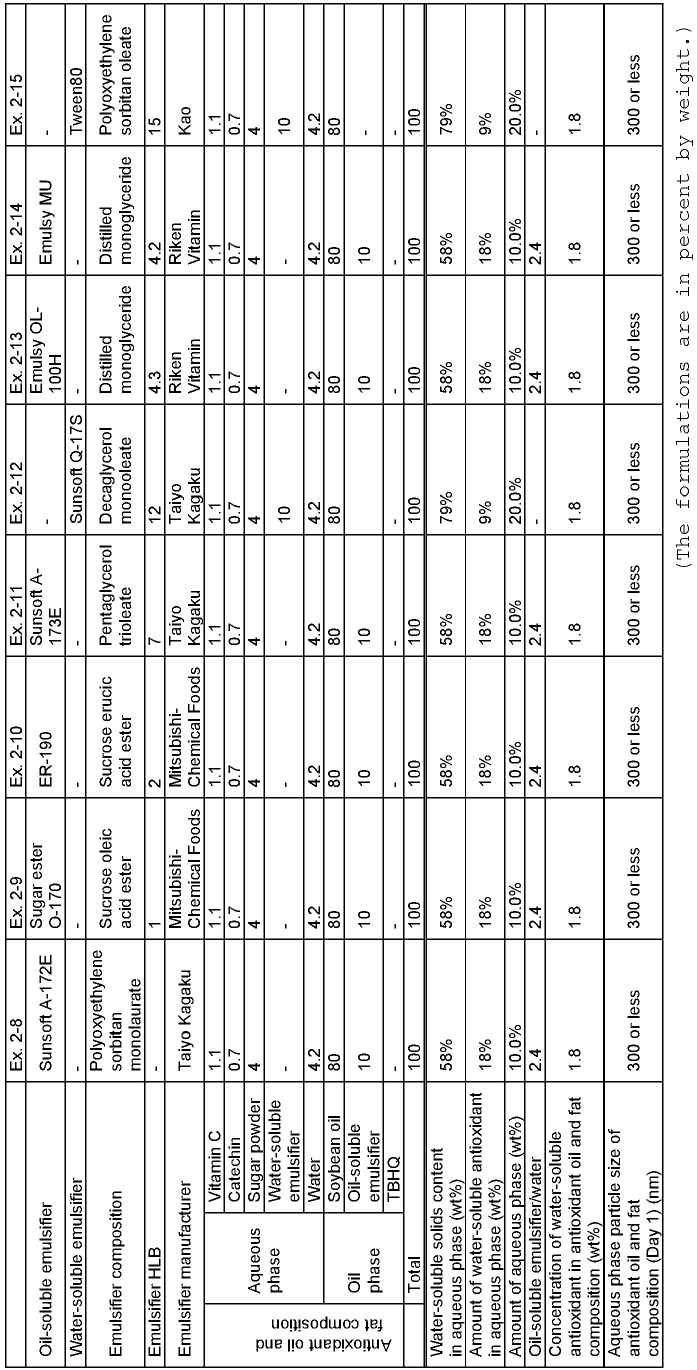

- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- The "oil-soluble emulsifier/water" refers to the amount of oil-soluble emulsifier in each antioxidant oil and fat composition, relative to water.
- For TBHQ, a product of Amalfi (Product Number 3015200) was used.
- Precipitation was not observed in all of the aqueous phase prepared in accordance with the formulations.

### Method for preparing an oil and fat composition (study 2)

1. The aqueous phase components and the oil phase components were separately dissolved by mixing. TBHQ was dissolved in the oil phase.
2. The aqueous phase and the oil phase were mixed, and the mixture was roughly emulsified to obtain a water-in-oil emulsified liquid.
3. The emulsified liquid obtained in 2 above was emulsified using a high-pressure homogenizer (37 MPa, 20 passes) to obtain a water-in-oil emulsified product.

### Method of evaluation of oxidative stability based on POV (study 2)

1. Each sample (7.5 g) was diluted 4-fold with oil and fat containing EPA (19.8%) and DHA (45.4%).
2. The oil and fat obtained in 1 above after dilution was placed into a 50-ml glass bottle, and the bottle was covered with a lid, which was then placed into an incubator at 60°C, followed by stirring at 80 rpm.
3. Samples were taken on day 5, and the peroxide value (POV) was measured. The POV was measured in accordance with the Standard methods for the analysis of fats, oils and related materials.
4. The samples with a POV of 14 or less on day 5 were evaluated as pass.

**Table 2-2: Results**

| | Comp. Ex. 2-1 | Comp. Ex. 2-2 | Ex. 2-1 | Ex. 2-2 | Ex. 2-3 | Ex. 2-4 | Ex. 2-5 | Ex. 2-6 | Ex. 2-7 |
|---|---|---|---|---|---|---|---|---|---|
| POV (Day 5) | 53.1 | 15.2 | 7.3 | 0 | 0 | 0 | 3.3 | 0 | 2.8 |

| | Ex. 2-8 | Ex. 2-9 | Ex. 2-10 | Ex. 2-11 | Ex. 2-12 | Ex. 2-13 | Ex. 2-14 | Ex. 2-15 | |
|---|---|---|---|---|---|---|---|---|---|
| POV (Day 5) | 0 | 3 | 0 | 0 | 12.3 | 0 | 0 | 13.8 | |

### Discussion 1

- When TBHQ, which is a strong antioxidant, was used, the POV was reduced to 15.2, although the POV of the control (Comparative Example 2-1) was 53.1. The results also confirmed that the antioxidant oil and fat composition according to the present invention further prevented the increase in the POV; when the oil-soluble emulsifier was used in combination, this effect was further enhanced.
- In the present invention, the oil-soluble emulsifier used was preferably a polyglycerol ester, a sugar ester, or a distilled monoglyceride, particularly preferably a polyglycerol ester, and most preferably a polyglycerol condensed ricinoleic acid ester.
- The use of an emulsifier with a high HLB did not sufficiently prevent the increase in the POV.

### Study 2(2): Type of oil-soluble emulsifier

Samples of formulations shown in Table 2-3 were prepared in accordance with the "Method for preparing an oil and fat composition (study 2)."

The obtained samples were evaluated by the "Method of evaluation of oxidative stability based on CDM (study 2-2)." Table 2-4 shows the results.

In this study as well, an actual measurement of the particle size with the use of a device was not performed after the emulsifying operation; however, because it was visually confirmed that precipitation etc. did not occur in the samples of the Examples, the particle sizes in the Examples were all considered to be 300 nm or less.

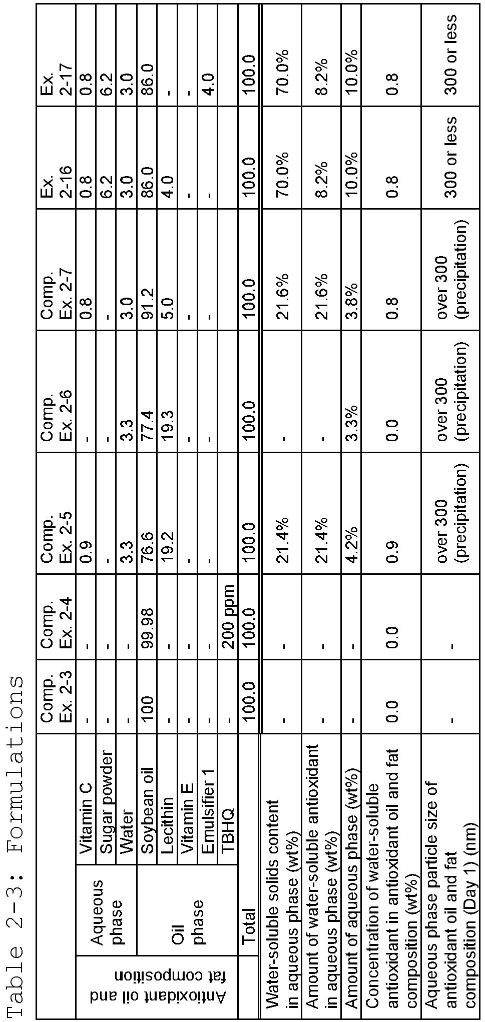

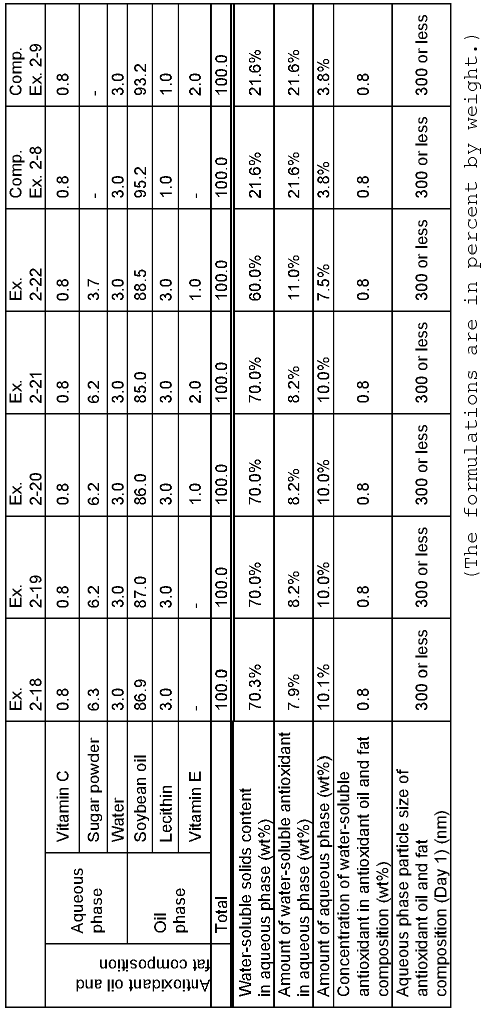

- For the soybean oil, soybean *sirasimeyu* (refined soybean oil) produced by Fuji Oil Co., Ltd. was used.
- For the vitamin E, "E-Mix 70L" produced by Eisai Food & Chemical Co., Ltd. was used.
- For the lecithin, soybean lecithin was used.
- For emulsifier 1, a polyglycerol condensed ricinoleic acid ester "CRS-75" produced by Sakamoto Yakuhin Kogyo Co., Ltd. was used.
- Precipitation was not observed in all of the aqueous phase prepared in accordance with the formulations.

### Method of evaluation of oxidative stability based on CDM (study 2-2)

1. Each sample was added to PUFA oil containing DHA (37%) and EPA (1.9%) such that the ratio of sample:PUFA oil = 2 parts:8 parts, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. The samples that had a CDM value equal to or greater than that of Comparative Example 2-4 were evaluated as pass.

**Table 2-4: Results**

| | Comp. Ex. 2-3 | Comp. Ex. 2-4 | Comp. Ex. 2-5 | Comp. Ex. 2-6 | Comp. Ex. 2-7 | Ex. 2-16 | Ex. 2-17 |
|---|---|---|---|---|---|---|---|
| CDM value | 6.95 | 11 | - | - | - | 16.08 | 24.21 |
| Pass/Fail | - | - | - | - | - | Pass | Pass |

| | Ex. -18 | Ex. 2-19 | Ex. 2-20 | Ex. 2-21 | Ex. -22 | Comp. Ex. 2-8 | Comp. Ex. 2-9 |
|---|---|---|---|---|---|---|---|
| CDM value | 14.67 | 15.75 | 14.31 | 14.95 | 13.93 | 9.7 | 10.3 |
| Pass/Fail | Pass | Pass | Pass | Pass | Pass | Fail | Fail |

- In Comparative Examples 2-5, 2-6, and 2-7, precipitation was observed in the prepared antioxidant oil and fat composition; thus, the subsequent antioxidative activity evaluation was not performed.

### Discussion 2

- As stated above, even when a lecithin was used, excellent antioxidative activity was achieved.
- On a trial basis, vitamin E, which is an oil-soluble antioxidant, was added; however, the effect thereof could not be observed.

### Study 3: Study of each water-soluble solids content

Samples of formulations shown in Table 3-1 were prepared in accordance with the "Method for preparing an oil and fat composition (study 3)." The obtained samples were evaluated by the "Method of evaluation of oxidative stability based on CDM (study 3)." Table 3-2 shows the results.

In Example 3-15 and Comparative Example 3-9, evaluation was performed in accordance with the "Method of evaluation of oxidative stability based on POV (study 3)." Table 3-3 shows the results.

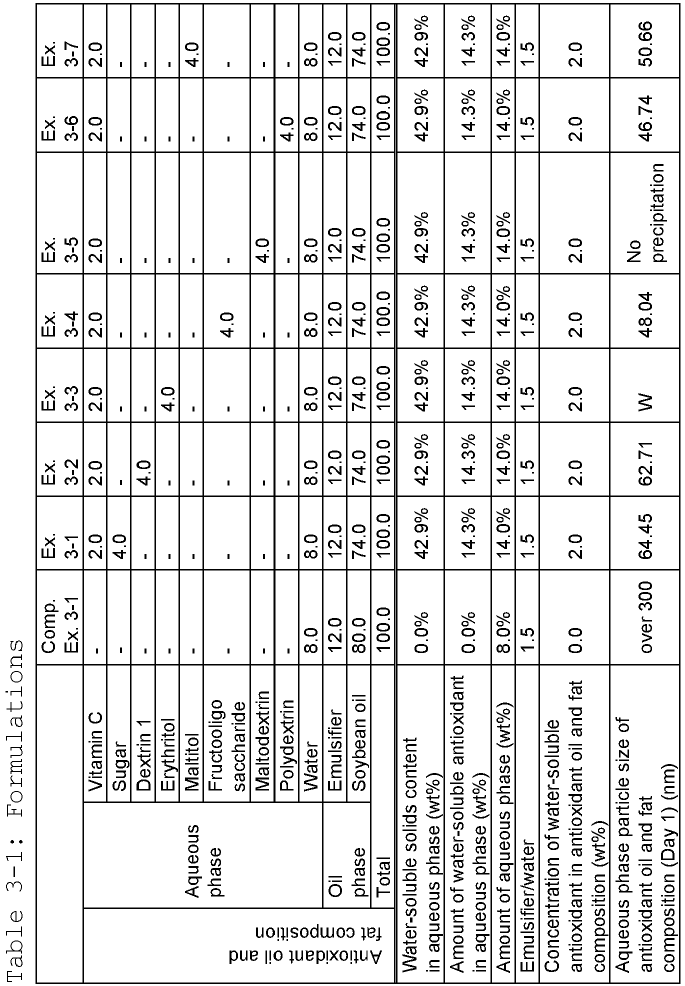

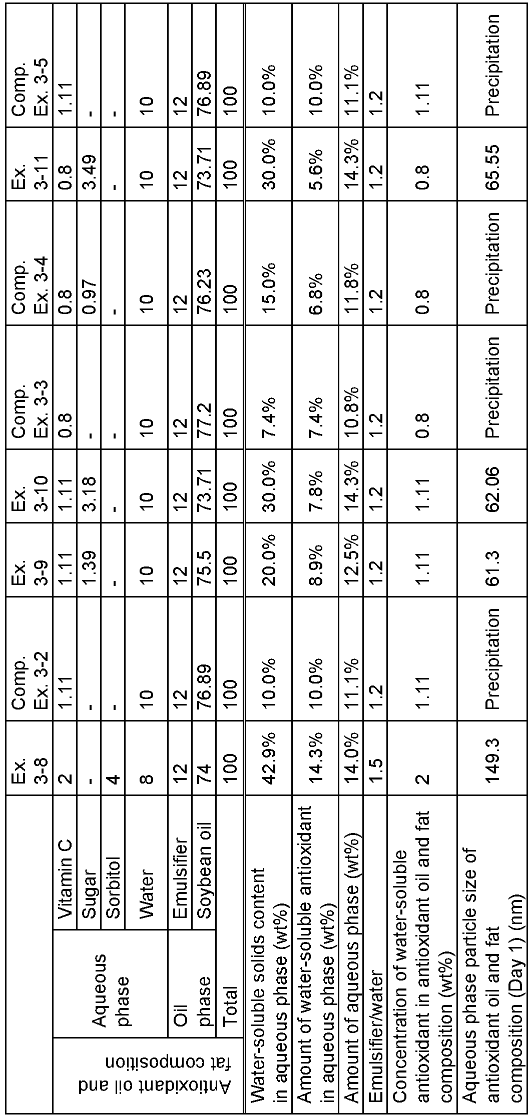

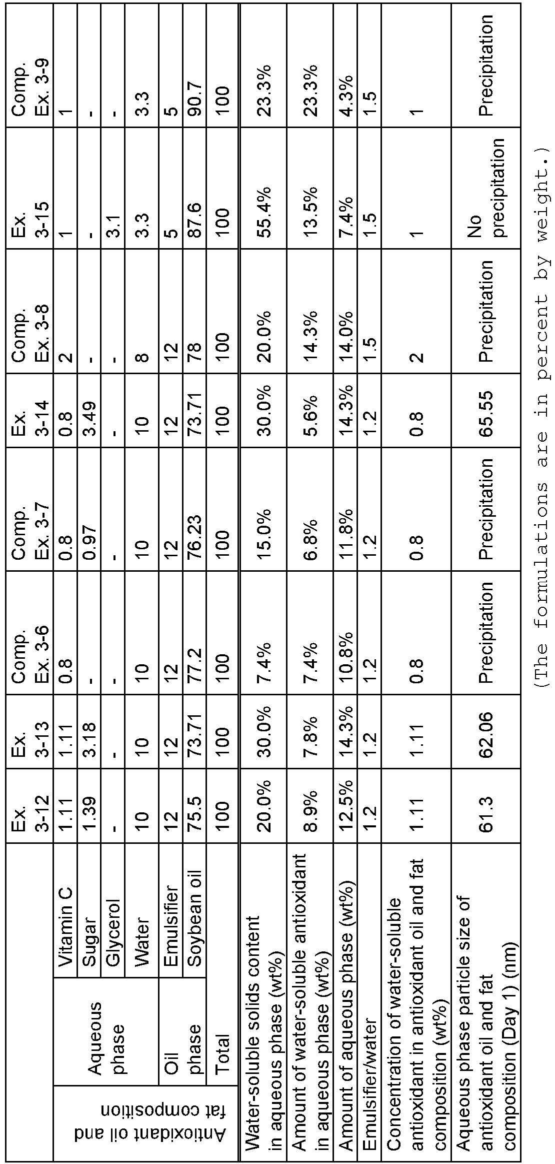

- For dextrin 1, "Sandec 150" produced by Sanwa Starch Co., Ltd. was used.
- For the fructooligosaccharide, fructooligosaccharide produced by Wako Pure Chemical Industries, Ltd. was used.
- For the maltodextrin, "Pinedex #4" produced by Matsutani Chemical Industry Co., Ltd. was used.
- For the polydextrin, "Litesse Ultra" produced by DuPont Danisco was used.
- For the emulsifier, a polyglycerol condensed ricinoleic acid ester "CRS-75" produced by Sakamoto Yakuhin Kogyo Co., Ltd. was used.
- For the soybean oil, soybean *sirasimeyu* (refined soybean oil) produced by Fuji Oil Co., Ltd. was used.
- For the glycerol, a food additive, glycerol, produced by Kishida Chemical Co., Ltd. was used.
- The row titled ". . . particle size . . . (Day 1) (nm)" shows the particle sizes measured on day 1 after the emulsification step. Here, "W" means that a double peak was present, although no precipitation was observed. The term "No precipitation" means that it was visually confirmed that precipitation did not occur, although the particle size was not measured.
- Precipitation was not observed in all of the aqueous phase prepared in accordance with the formulations.

### Method for preparing an oil and fat composition (study 3)

1. The aqueous phase components and the oil phase components were separately dissolved by mixing.
2. The aqueous phase and the oil phase were mixed, and the mixture was roughly emulsified to obtain a water-in-oil emulsified liquid.
3. The emulsified liquid obtained in 2 above was emulsified using a high-pressure homogenizer (37 MPa, 20 passes) to obtain a water-in-oil emulsified product.

### Method of evaluation of oxidative stability based on CDM (study 3)

1. Each sample was diluted 4-fold with PUFA oil (containing EPA: 19.8% and DHA: 45.4%).
2. The oxidative stability of each diluted sample (3.0 g) obtained in 1 above was evaluated using a CDM measurement device ("Rancimat" produced by Metrohm) at 96°C, at an air-blowing rate of 20.0 L/h with a sample-introducing amount of 3.0 g (amount of water: 70 ml). Additionally, soybean oil was diluted instead of the samples 4-fold with PUFA oil, and measurement was performed in a manner similar to the above. The measured values are shown in the "CDM of control oil and fat."
3. The CDM value of each diluted sample obtained in 2 above was divided by the "CDM of control oil and fat," and the resulting values of 2.9 or greater were evaluated as pass.

For the samples in which precipitation was observed at the time of the measurement, basically, the CDM value was not measured.

(The DCM value of 3.0 g of soybean oil measured under the conditions of 2 above was 20 hrs.)

### Method of evaluation of oxidative stability based on POV (study 3)

1. Four parts by weight of tuna oil ("DHA22K" produced by Maruha Nichiro Foods, Inc.) was mixed per 1 part by weight of the sample of Example 3-15 or Comparative Example 3-9.
2. Fifty milliliters of the obtained mixed oil was introduced into a 100-ml tall beaker, and the resulting product was stirred at 80 rpm in an incubator at 60°C in an open system while shielded from light with aluminum foil.
3. Samples were taken over time, and the peroxide value (POV) was measured. The POV measurement was performed in accordance with an iodometric titration method.
4. The samples with a POV of 5.0 or less on day 10 were evaluated as pass, while the samples with a POV of 1 or greater on day 3 were evaluated as fail.

As a control, a product obtained by mixing 4 parts by weight of the same tuna oil per 1 part by weight of soybean oil was used.

**Table 3-2: Results 1**

| | Comp. Ex. 3-1 | Ex. 3-1 | Ex. 3-2 | Ex. 3-3 | Ex. 3-4 | Ex. 3-5 | Ex. 3-6 | Ex. 3-7 |
|---|---|---|---|---|---|---|---|---|
| CDM of control oil and fat | 5.5 | 5.5 | 5.5 | 5.5 | 5.5 | 5.5 | 5.5 | 5.5 |
| CDM of sample | 2.9 | 21.1 | 17.2 | 22.7 | 16.5 | 17.2 | 17.5 | 21.4 |
| Sample/control | 0.5 | 3.8 | 3.1 | 4.1 | 3.0 | 3.1 | 3.2 | 3.9 |

| | Ex. 3-8 | Comp. Ex. 3-2 | Ex. 3-9 | Ex. 3-10 | Comp. Ex. 3-3 | Comp. Ex. 3-4 | Ex. 3-11 | Comp. Ex. 3-5 |
|---|---|---|---|---|---|---|---|---|
| CDM of control oil and fat | 5.5 | 5.5 | 5.5 | 5.5 | 5.5 | 5.5 | 5.5 | 5.5 |
| CDM of sample | 26.9 | - | 24.46 | 29.66 | - | - | 24.88 | - |
| Sample/control | 4.9 | - | 4.4 | 5.4 | - | - | 4.5 | - |

| | Ex. 3-12 | Ex. 3-13 | Comp. Ex. 3-6 | Comp. Ex. 3-7 | Ex. 3-14 | Comp. Ex. 3-8 | | |
|---|---|---|---|---|---|---|---|---|
| CDM of control oil and fat | 5.5 | 5.5 | 5.5 | 5.5 | 5.5 | 5.5 | | |
| CDM of sample | 24.5 | 29.7 | - | - | 24.9 | (15.5) | | |
| Sample/control | 4.5 | 5.4 | - | - | 4.5 | (2.8) | | |

**Table 3-3: Results 2**

| | Control | Ex. 3-15 | Comp. Ex. 3-9 |
|---|---|---|---|
| Day 1 | 7.7 | - | - |
| Day 2 | 27.1 | 0 | 0 |
| Day 3 | 123.1 | - | - |
| Day 4 | - | - | - |
| Day 5 | - | - | 0 |
| Day 6 | - | 0 | 0 |
| Day 10 | - | 0 | 27.5 |
| Day 13 | - | 0 | - |

### Discussion

- The use of various carbohydrates as water-soluble solids resulted in the prevention of the occurrence of precipitation.
- In Comparative Example 3-8, precipitation was observed on day 1. When precipitation was observed, the CDM value was basically not measured. On a trial basis, however, the CDM value was measured. The results confirmed that both Example 3-1, which used a sugar,
   and Example 3-8, which used sorbitol, achieved a higher CDM value than Comparative Example 3-8. These results confirmed that the use of a carbohydrate, which is believed to not have antioxidative activity in itself, improved not only emulsification stability but also antioxidative activity.
- The CDM value is a numerical value obtained by a method for measuring antioxidative activity under stirring, the method comprising bubbling air. Thus, in the application to food products, which are basically stored while left to stand, the antioxidative activity was presumed to be further reduced due to the occurrence of precipitation.

### Study 3-2: Study of each water-soluble solids content

Samples of formulations shown in Table 3-4 were prepared in accordance with the "Method for preparing an oil and fat composition (study 3-2)." The obtained samples were evaluated by the "Method of evaluation of oxidative stability based on CDM (study 3-2)." Table 3-5 shows the results.

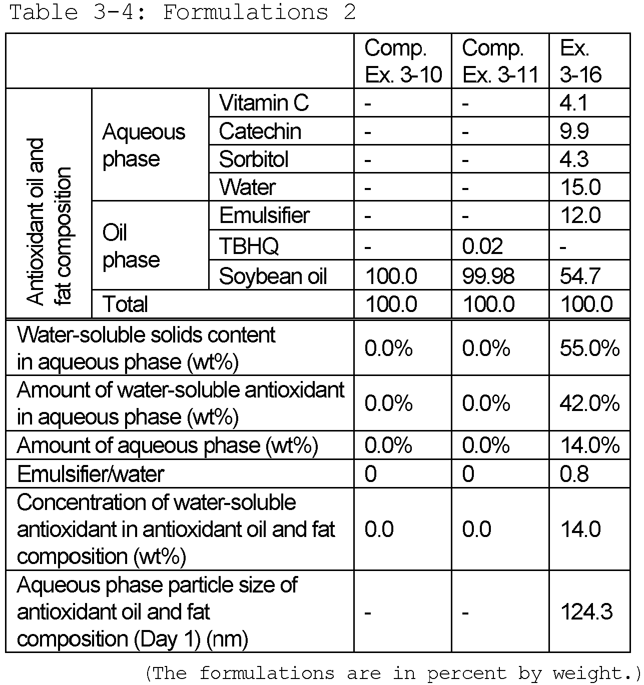

- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For TBHQ, a product of Amalfi (Product Number 3015200) was used.
- Precipitation was not observed in all of the aqueous phase prepared in accordance with the formulations.

### Method for preparing an oil and fat composition (study 3-2)

1. In Example 3-16, the aqueous phase components and the oil phase components were separately dissolved by mixing. In Comparative Examples 3-10 and 3-11, only the oil phase was prepared to use it as a sample.
2. In Example 3-16, the aqueous phase and the oil phase were mixed, and the mixture was roughly emulsified to obtain a water-in-oil emulsified liquid.
3. The emulsified liquid obtained in 2 above was emulsified using a high-pressure homogenizer (37 MPa, 20 passes) to obtain a water-in-oil emulsified product.

### Method of evaluation of oxidative stability based on CDM (study 3-2)

1. Each sample was added to PUFA oil containing EPA (19.8%) and DHA (45.4%) such that the ratio of each sample:PUFA oil = 1 part by weight:9 parts by weight, followed by dilution.
2. The oxidative stability of each diluted sample (3.0 g) obtained in 1 above was evaluated using a CDM measurement device ("Rancimat" produced by Metrohm) at 96°C, at an air-blowing rate of 20.0 L/h with a sample-introducing amount of 3.0 g (amount of water: 70 ml).
3. The values obtained by using the samples of Comparative Example 3-11 and Example 3-16 were separately divided by the value obtained by using the sample of Comparative Example 3-10. When the resulting value was 2 or greater, the sample was evaluated as pass.

**Table 3-5: Results 2**

| | Comp. Ex. 3-10 | Comp. Ex. 3-11 | Ex. 3-16 |
|---|---|---|---|
| CDM value of Comp. Ex. 3-10 (hrs) (control) | 5.6 | 5.6 | 5.6 |
| CDM value of sample (hrs) | 5.6 | 8.6 | 40.4 |
| Sample/control | - | 1.5 | 7.2 |

### Discussion

- Even in evaluation systems that contain a large amount of PUFA oil, the antioxidant oil and fat composition according to the present invention had antioxidative activity higher than that of TBHQ. In the evaluation systems, the total amount of DHA and EPA was 58.7 wt%. This suggests that high stability would also be achieved in the unsaturated fatty acid-containing oil and fat composition that contains DHA and EPA in a total amount of about 60 wt%.

### Study 4: Study of amino acids as an antioxidant

Samples of formulations shown in Table 4-1 were prepared in accordance with the "Method for preparing an antioxidant oil and fat composition (study 4)." The obtained samples were evaluated in accordance with the "Method of evaluation of oxidative stability based on CDM (study 4)." Table 4-2 shows the results.

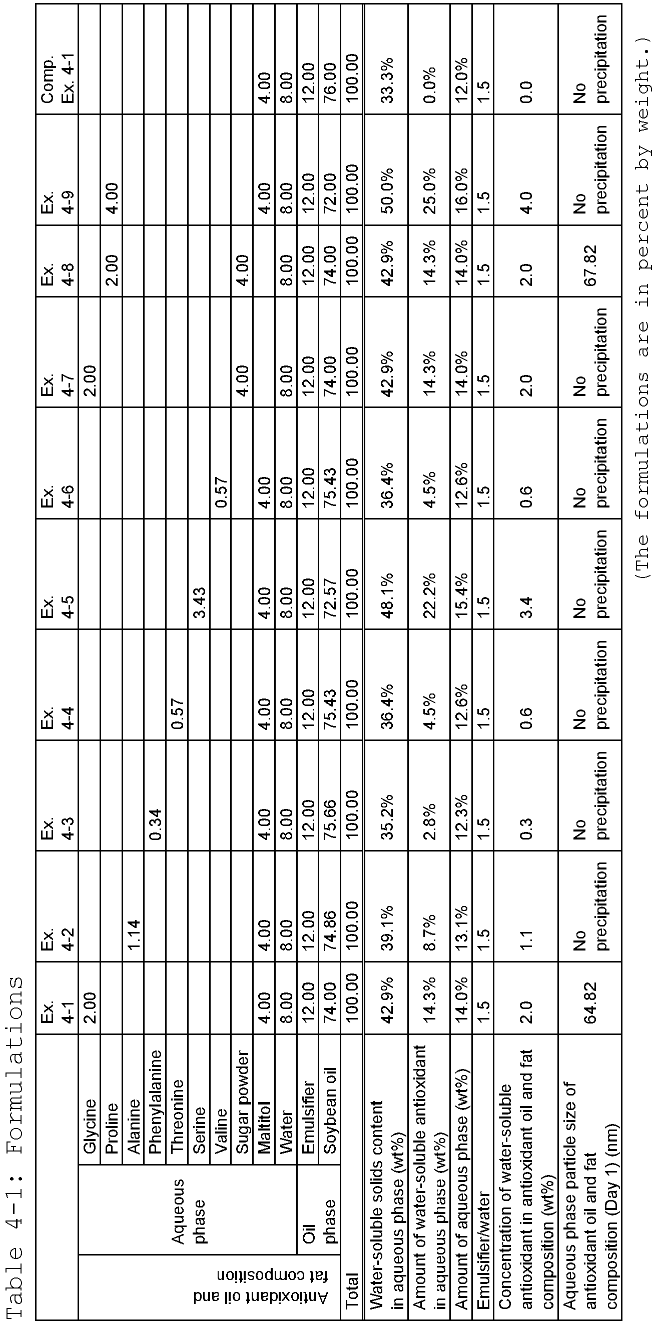

- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.
- For the glycine and serine, food additive grade glycine and serine produced by Kyowa Hakko Kogyo Co., Ltd. were used. For the other amino acids, those of food additive grades produced by Nippon Rika Co., Ltd. were used.
- Precipitation was not observed in all of the aqueous phase prepared in accordance with the formulations.

### Method for preparing an oil and fat composition (study 4)

1. The aqueous phase components and the oil phase components were separately dissolved by mixing.
2. The aqueous phase and the oil phase were mixed, and the mixture was roughly emulsified to obtain a water-in-oil emulsified liquid.
3. The emulsified liquid obtained in 2 above was emulsified using a high-pressure homogenizer (37 MPa, 20 passes) to obtain a water-in-oil emulsified product.

### Method of evaluation of oxidative stability based on CDM (study 4)

1. Each sample was added to PUFA oil containing EPA (19.1%) and DHA (37.3%) such that the ratio of sample:PUFA oil = 1:9, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. Those with a CDM value 1.2 times or more greater than that of the control obtained by using soybean oil instead of the samples used in 1 above were evaluated as pass.

**Table 4-2: Results**

| | Ex. 4-1 | Ex. 4-2 | Ex. 4-3 | Ex. 4-4 | Ex. 4-5 | Ex. -6 | Ex. 4-7 | Ex. 4-8 | Ex. 4-9 | Comp. Ex. 4-1 |
|---|---|---|---|---|---|---|---|---|---|---|
| CDM of control oil and fat (hr) | 5.8 | 5.8 | 5.8 | 5.8 | 5.8 | 5.8 | 5.8 | 5.8 | 5.8 | 5.8 |
| CDM value of sample (hr) | 13.36 | 13.34 | 7.59 | 9.88 | 14.24 | 8.4 | 18.3 | 19.41 | 31.36 | 6.4 |
| Sample/control | 2.30 | 2.30 | 1.31 | 1.70 | 2.46 | 1.45 | 3.16 | 3.35 | 5.41 | 1.10 |

### Discussion

Amino acids have different solubility according to their type; amino acids of low solubility dissolved less in an aqueous phase, and accordingly, tended to achieve less antioxidative activity. Nevertheless, it was confirmed that the use of all of the amino acids had a tendency of achieving increased antioxidative activity.

### Study 4-2: Study of amino acids as an antioxidant (2)

To compare the antioxidative activity of each amino acid, comparative analysis was performed by adjusting the concentration of each amino acid in the aqueous phase to 144 mM or 25 mM.

Samples of formulations shown in Table 4-3 were prepared in accordance with the "Method for preparing an oil and fat composition (study 4)." The obtained samples were evaluated in accordance with the "Method of evaluation of oxidative stability based on CDM (study 4-2)." Table 4-4 shows the results.

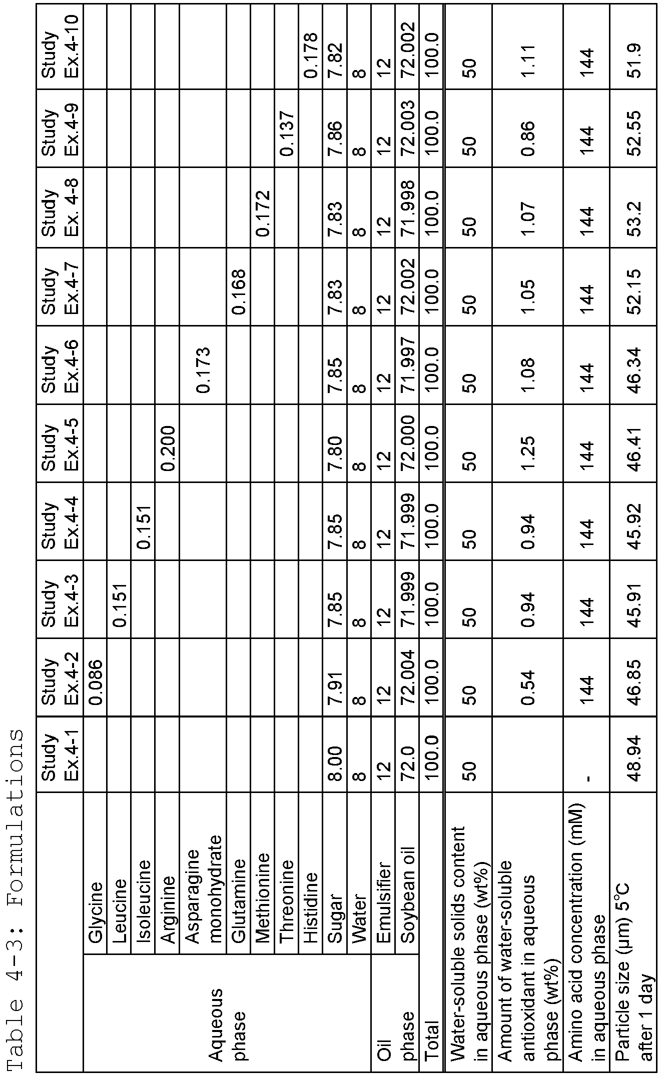

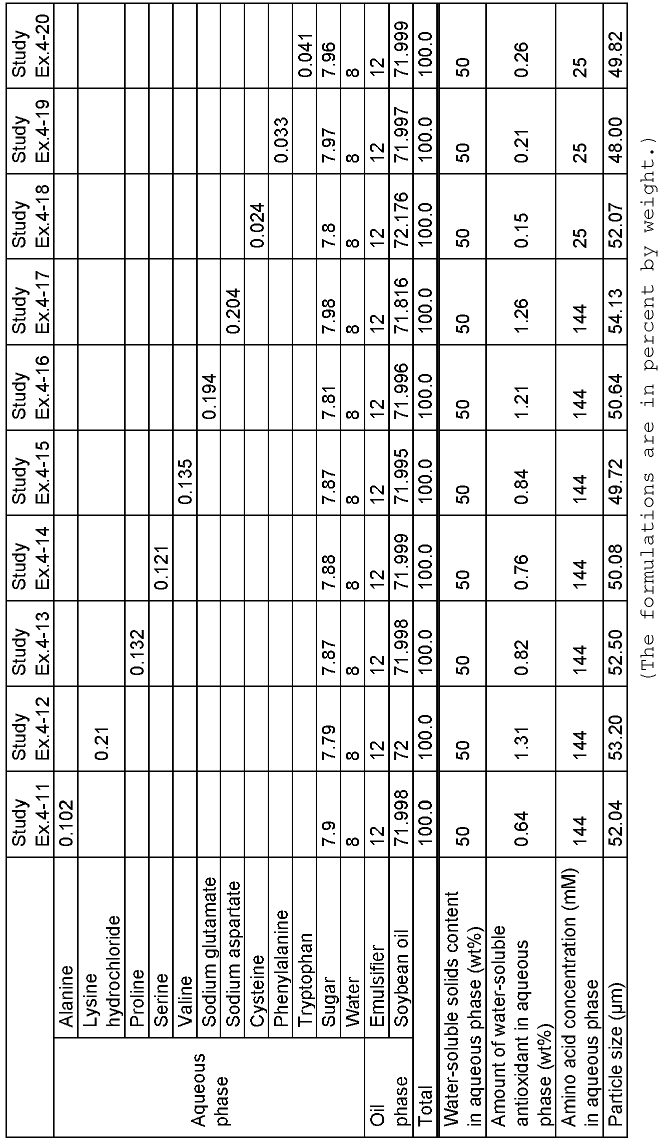

- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.
- Precipitation was not observed in all of the aqueous phase prepared in accordance with the formulations of the Examples.

### Method of evaluation of oxidative stability (study 4-2)

1. Each sample was added to fish oil containing DHA (20.0%) and EPA (5.7%) such that the ratio of sample:fish oil = 1:9, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. The samples that had a CDM value equal to or greater than that of Study Example 4-1 were evaluated as pass.

**Table 4-4: Results**

| | Study Ex.4-1 | Study Ex.4-2 | Study Ex.4-3 | Study Ex.4-4 | Study Ex.4-5 | Study Ex.4-6 | Study Ex.4-7 | Study Ex.4-8 | Study Ex.4-9 | Study Ex.4-10 |
|---|---|---|---|---|---|---|---|---|---|---|
| CDM value (hrs) | 6.15 | 8.45 | 8.97 | 8.9 | 8.21 | 8.04 | 7.62 | 10.08 | 8.61 | 8.21 |

| | Study Ex.4-11 | Study Ex.4-12 | Study Ex.4-13 | Study Ex.4-14 | Study Ex.4-15 | Study Ex.4-16 | Study Ex.4-17 | Study Ex.4-18 | Study Ex.4-19 | Study Ex.4-20 |
|---|---|---|---|---|---|---|---|---|---|---|
| CDM value (hrs) | 8.72 | 8.87 | 10.09 | 8.27 | 8.91 | 8.02 | 8.28 | 7.32 | 7.28 | 8.13 |

### Discussion

- To compare the antioxidative activity per molar concentration of each amino acid, a test was performed by adjusting the concentrations to be equal to each other such that each target amino acid for comparison could be easily dissolved.
- As shown in Table 4-4, all of the tested amino acids had a CDM value equal to or greater than that of Study Example 4-1, and were evaluated as pass.
- According to the above results, it is presumed that the oil and fat composition prepared with the concentration predetermined according to the present invention would achieve sufficient antioxidative activity.

### Study 5: Study of the solids content, the amount of antioxidants, etc.

Samples of formulations shown in Table 5-1 were prepared in accordance with the "Method for preparing an oil and fat composition (study 5)." The obtained samples were evaluated in accordance with the "Method of evaluation of oxidative stability based on CDM (study 5)." Table 5-2 shows the results.

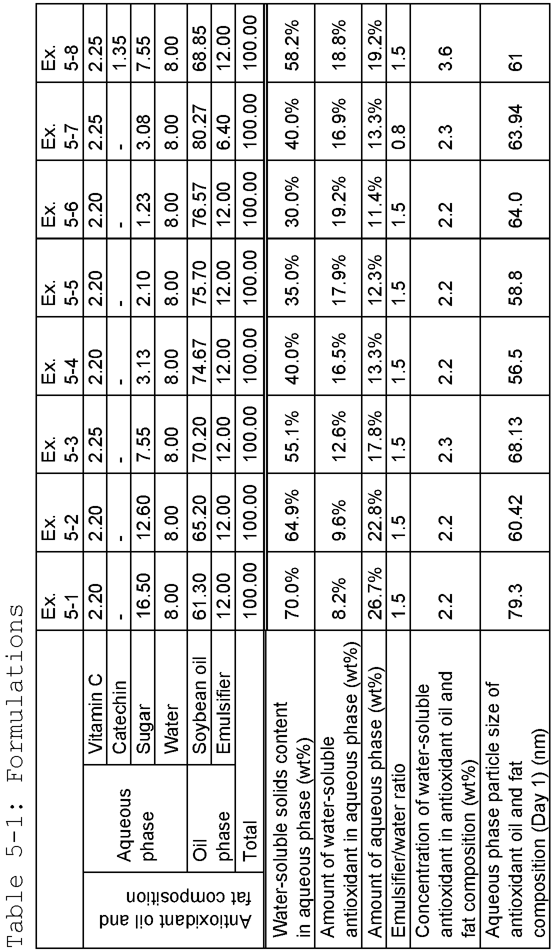

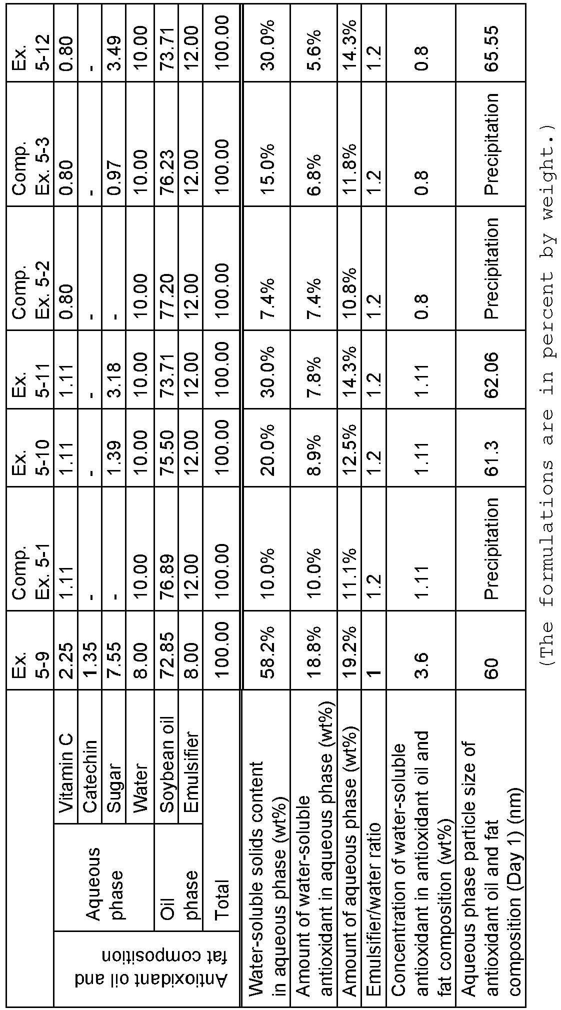

- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.
- Precipitation was not observed in all of the aqueous phase prepared in accordance with the formulations of the Examples.

### Method for preparing an oil and fat composition (study 5)

1. The aqueous phase components shown in the formulations were dissolved by mixing to obtain an aqueous phase.
2. As shown in the formulations, the emulsifier was dissolved in oil and fat to obtain an oil phase.
3. The aqueous phase was introduced into the oil phase, and the mixture was mixed using a homomixer to obtain an emulsified liquid.
4. Further, emulsification was performed using a high-pressure homogenizer (37 MPa, 20 passes) to obtain a water-in-oil emulsified product.

### Method of evaluation of oxidative stability based on CDM (study 5)

1. Each sample was added to PUFA oil containing DHA (37%) and EPA (1.9%) such that the ratio of sample:PUFA oil = 2 parts:8 parts, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. The samples with a CDM value 1.2 times or more greater than that of the control obtained by using soybean oil instead of the samples used in 1 above were evaluated as pass.

**Table 5-2: Results**

| | Ex. 5-1 | Ex. 5-2 | Ex. 5-3 | Ex. 5-4 | Ex. 5-5 | Ex. 5-6 | Ex. 5-7 | Ex. 5-8 |
|---|---|---|---|---|---|---|---|---|
| CDM value of control oil and fat | 5.5 | 5.5 | 5.5 | 5.5 | 5.5 | 5.5 | 5.5 | 5.5 |
| CDM value of sample | 16.43 | 16.48 | 26.83 | 18.3 | 18.3 | 16.2 | 20.2 | 19.1 |
| Sample/control | 3.0 | 3.0 | 4.9 | 3.3 | 3.3 | 2.9 | 3.7 | 3.5 |

| | Ex. 5-9 | Comp. Ex. 5-1 | Ex. 5-10 | Ex. 5-11 | Comp. Ex. 5-2 | Comp. Ex. 5-3 | Ex. 5-12 | |
|---|---|---|---|---|---|---|---|---|
| CDM value of control oil and fat | 5.5 | 5.5 | 5.5 | 5.5 | 5.5 | 5.5 | 5.5 | |
| CDM value of sample | 17.7 | - | 24.46 | 29.66 | - | - | 24.88 | |
| Sample/control | 3.2 | - | 4.4 | 5.4 | - | - | 4.5 | |

### Discussion

- Adjusting the water-soluble solids content and the amount of water-soluble antioxidant to predetermined values made it possible to obtain oil and fat compositions that had high antioxidative activity.

### Study 6: Study of the solids content, the amount of antioxidant, etc. 2

Samples of formulations shown in Table 6-1 were prepared in accordance with the "Method for preparing an oil and fat composition (study 6)." The obtained samples were evaluated by the "Method of evaluation of oxidative stability based on CDM (study 6)." Table 6-2 shows the results.

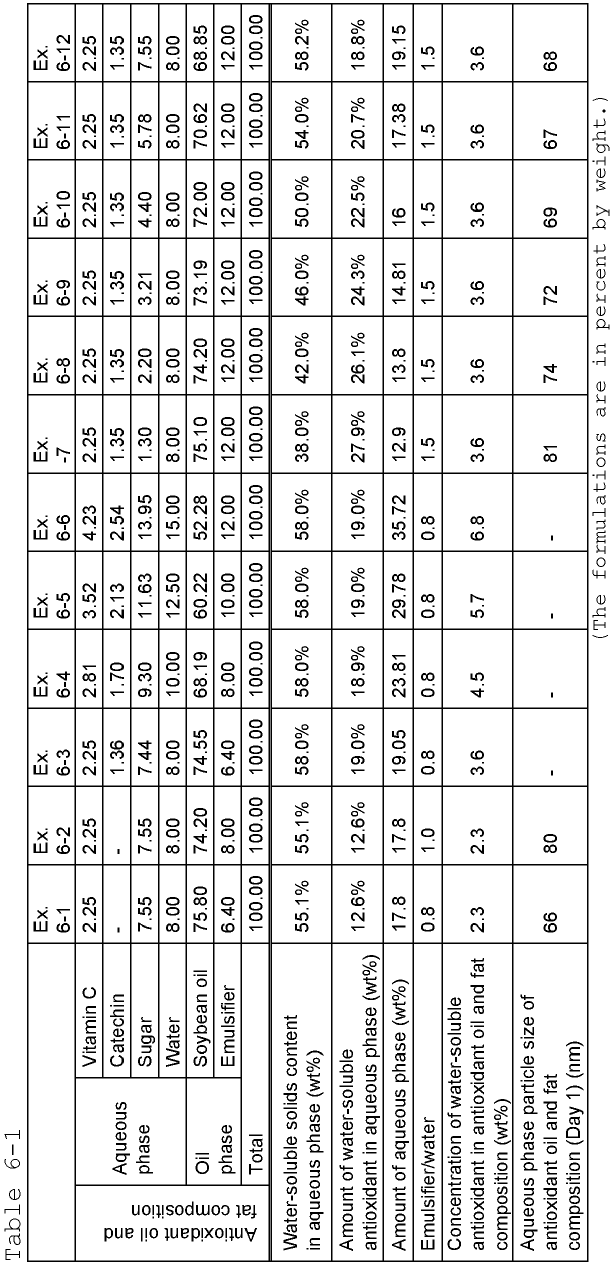

Note: In the particle size row, the symbol "-" indicates that although no measurement was performed using a device, it was visually confirmed that precipitation did not occur.
- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.
- Precipitation was not observed in all of the aqueous phase prepared in accordance with the formulations.

### Method for preparing an oil and fat composition (study 6)

1. The aqueous phase components shown in the formulations were dissolved by mixing to obtain an aqueous phase.
2. As shown in the formulations, the emulsifier was dissolved in oil and fat to obtain an oil phase.
3. The aqueous phase was introduced into the oil phase, and the mixture was mixed using a homomixer to obtain an emulsified liquid.
4. Further, emulsification was performed using a high-pressure homogenizer (37 MPa, 20 passes) to obtain a water-in-oil emulsified product.

### Method of evaluation of oxidative stability based on CDM (study 6)

1. Each sample was added to PUFA oil containing DHA (37%) and EPA (1.9%) such that the ratio of sample:PUFA oil = 2 parts:8 parts, followed by stirring.
2. The oxidative stability of the liquid mixture obtained in 1 above was evaluated using a CDM measurement device ("Rancimat" produced by Metrohm) at 96°C, at an air-blowing rate of 20.0 L/h with a sample-introducing amount of 3.0 g.
3. The samples with a CDM value 1.2 times or more greater than that of the control obtained by using soybean oil instead of the samples used in 1 above were evaluated as pass.

**Table 6-2: Results**

| | Ex. 6-1 | Ex. 6-2 | Ex. 6-3 | Ex. 6-4 | Ex. 6-5 | Ex. 6-6 | Ex. 6-7 | Ex. 6-8 | Ex. 6-9 | Ex. 6-10 | Ex. 6-11 | Ex. 6-12 |
|---|---|---|---|---|---|---|---|---|---|---|---|---|
| CDM value of control oil and fat | 5.5 | 5.5 | 5.5 | 5.5 | 5.5 | 5.5 | 5.5 | 5.5 | 5.5 | 5.5 | 5.5 | 5.5 |
| CDM value of sample | 16.7 | 22.5 | 16.9 | 18.5 | 20.3 | 22.2 | 21 | 23.3 | 24.1 | 24.8 | 23.5 | 23.7 |
| Sample/control | 3.0 | 4.1 | 3.1 | 3.4 | 3.7 | 4.0 | 3.8 | 4.2 | 4.4 | 4.5 | 4.3 | 4.3 |

### Discussion

- The results confirmed the following: irrespective of the difference in the formulations, if the water-soluble solids content etc. were within the predetermined ranges, high antioxidative activity would be achieved.

### Study 7: Study of production method

The difference in the antioxidative activity as a result of the difference in the production method was analyzed.

Samples of formulations shown in Table 7-1 were prepared in accordance with the "Method for preparing an oil and fat composition (study 7)." As shown in Table 7-2, samples for measurement of antioxidative activity were prepared using the obtained samples, and were subjected to Rancimat to measure the CDM value. The measurement was performed at 96°C, at an air-blowing rate of 20.0 L/h with a sample-introducing amount of 3.0 g (amount of water: 70 ml). The "Samples for measurement of antioxidative activity" were prepared by mixing the components in accordance with the formulations, and lightly stirring the mixture for homogenization.

Table 7-3 shows the CDM values. The samples with a CDM value 1.5 times or more greater than that of Comparative Example 7-1 were evaluated as pass.

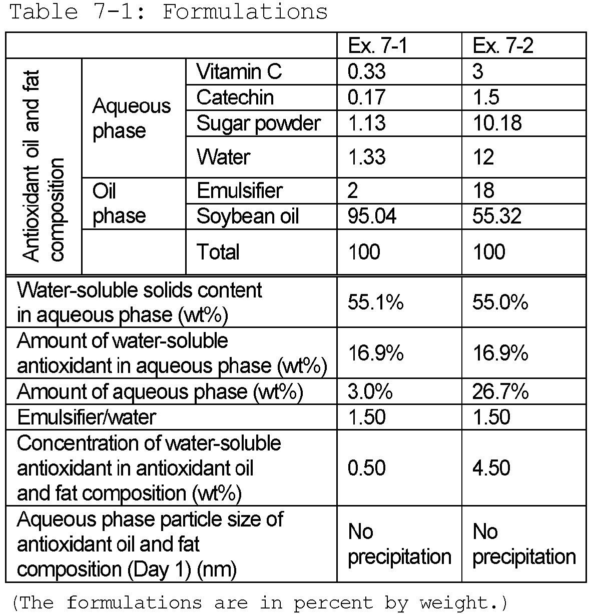

- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.

**Table 7-2**

| | | Comp. Ex. 7-1 | Ex. 7-3 | Ex. 7-4 |
|---|---|---|---|---|
| Samples for measurement of antioxidative activity | Antioxidant oil and fat composition of Ex. 7-1 | - | 90 | - |
| | Antioxidant oil and fat composition of Ex. 7-2 | - | - | 10 |
| | Soybean oil | 90 | | 80 |
| | PUFA oil | 10 | 10 | 10 |
| | Total | 100 | 100 | 100 |
| Composition at the time of CDM measurement (calculated value) | Vitamin C | - | 0.3 | 0.3 |
| | Catechin | - | 0.15 | 0.15 |
| | Sugar powder | - | 1.02 | 1.02 |
| | Water | - | 1.2 | 1.2 |
| | Emulsifier | - | 1.8 | 1.8 |
| | Soybean oil | 90 | 85.53 | 85.53 |
| | PUFA oil | 10 | 10 | 10 |
| | Total | 100 | 100 | 100 |

| | | | | |
|---|---|---|---|---|
| (The formulations are in percent by weight.) | | | | |

- For PUFA oil, oil and fat containing DHA and EPA in a total amount of 56.4 wt% was used.

### Method for preparing an oil and fat composition (study 7)

1. The aqueous phase components shown in the formulations were dissolved by mixing to obtain an aqueous phase.
2. As shown in the formulations, the emulsifier was dissolved in oil and fat to obtain an oil phase.
3. The aqueous phase was introduced into the oil phase, and the mixture was mixed using a homomixer to obtain an emulsified liquid.
4. Further, emulsification was performed using a high-pressure homogenizer (37 MPa, 20 passes) to obtain a water-in-oil emulsified product.

**Table 7-3: Results**

| | Comp. Ex. 7-1 | Ex. 7-3 | Ex. 7-4 |
|---|---|---|---|
| CDM value | 17.2 | 86.0 | 122.0 |
| Each sample/Comp. Ex. 7-1 | 1.0 | 5.0 | 7.1 |

### Discussion

The antioxidant oil and fat compositions were prepared by varying the concentration of the antioxidant such that the amounts of the antioxidant in the compositions were consequently equal to each other, and the CDM value was measured.

Table 7-3 indicates that the antioxidant oil and fat composition containing the antioxidant at a predetermined concentration had high antioxidative activity.

It was also confirmed that the antioxidant oil and fat composition of Example 7-4, which contained the antioxidant at a higher concentration, achieved higher antioxidative activity.

### Study 8: Analysis of partial dehydration

Oil and fat compositions of formulations "before" the dehydration step of tests A to X shown in Table 8-1 were prepared in accordance with the "Method for preparing an oil and fat composition (study 8)." Subsequently, partial dehydration was performed with nitrogen aeration. The formulations "after" the dehydration step shown in Table 8-1 refer to the compositions after dehydration according to calculations, considering the mass reduced as a result of the dehydration operation as dehydrated water.

Table 8-1 shows the particle size of each sample as required.

The obtained samples were evaluated in accordance with the "Method of evaluation of oxidative stability based on CDM (study 3)."

Table 8-2 shows the results.

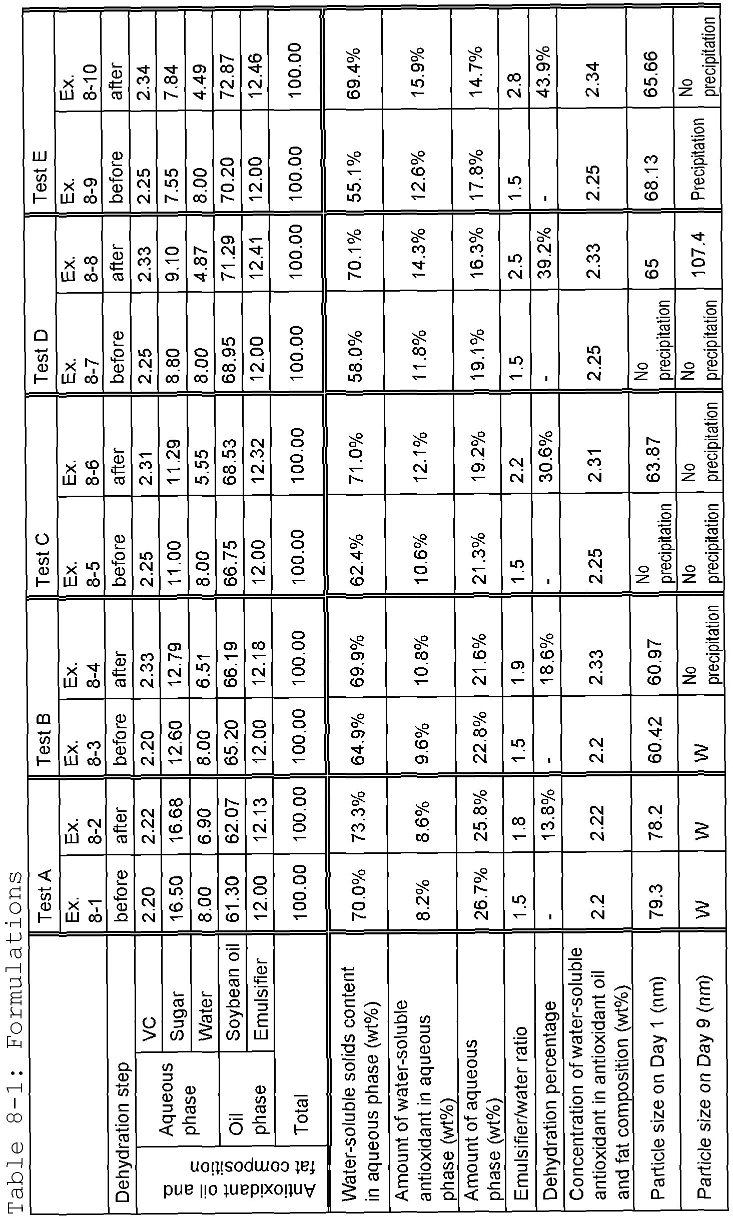

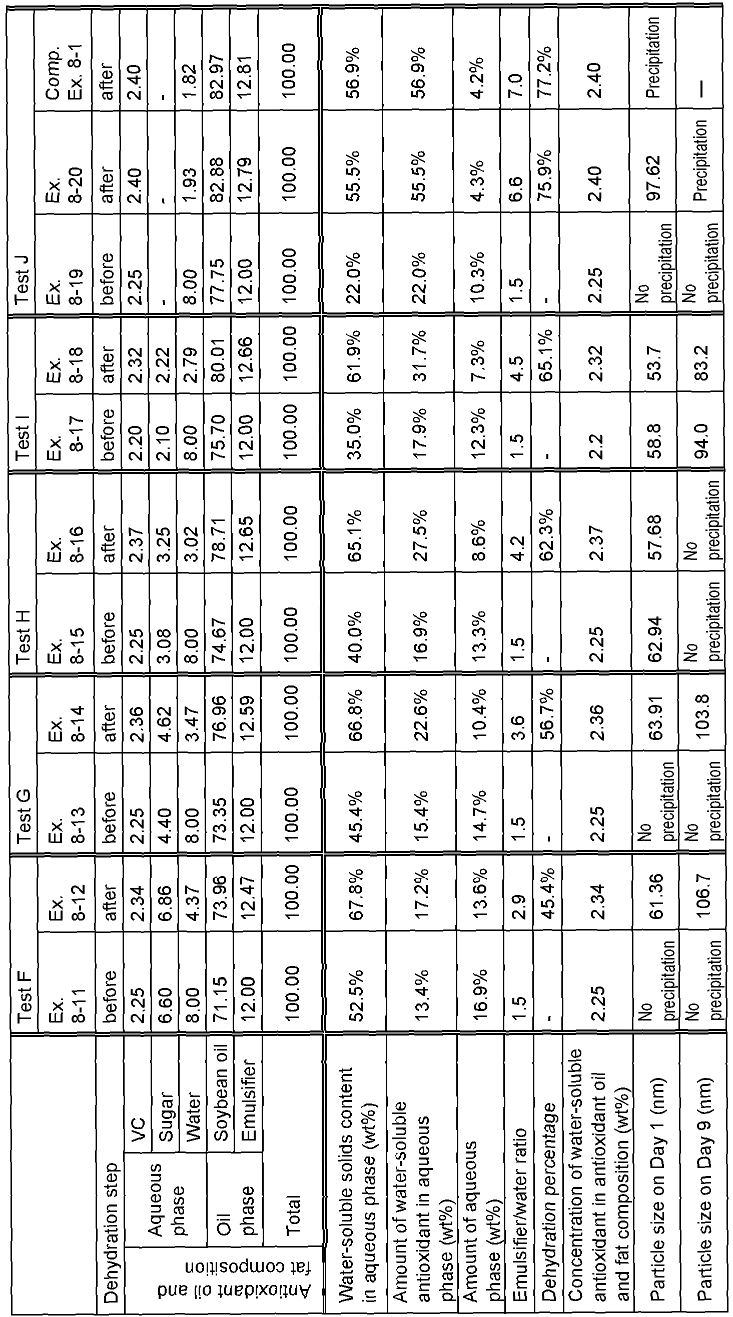

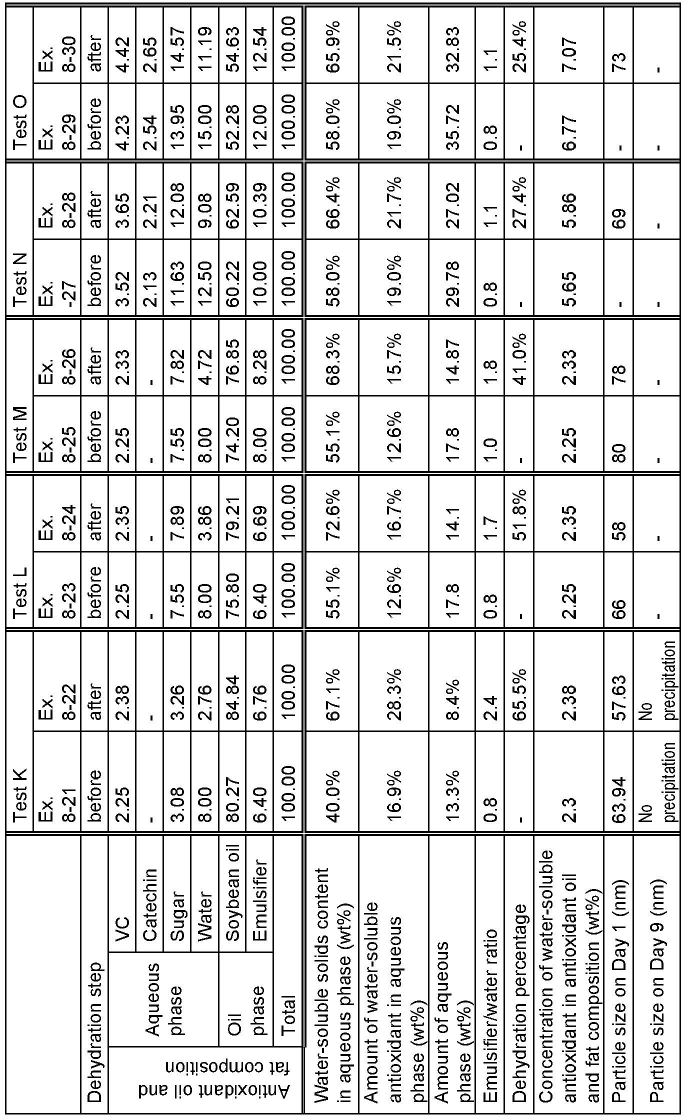

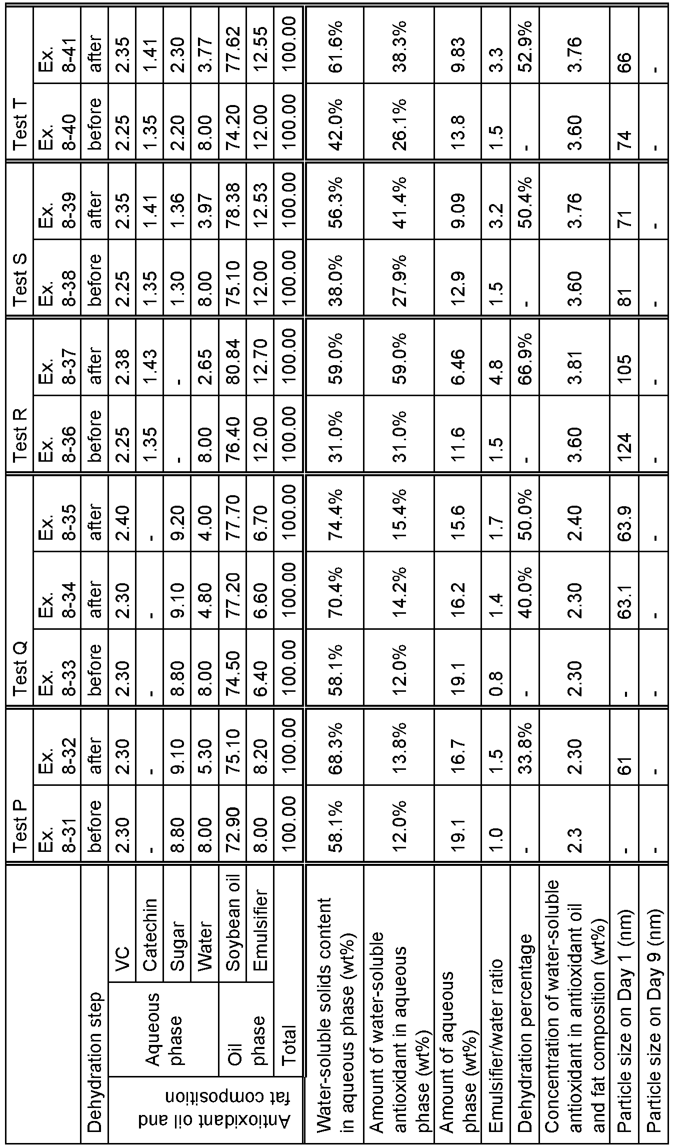

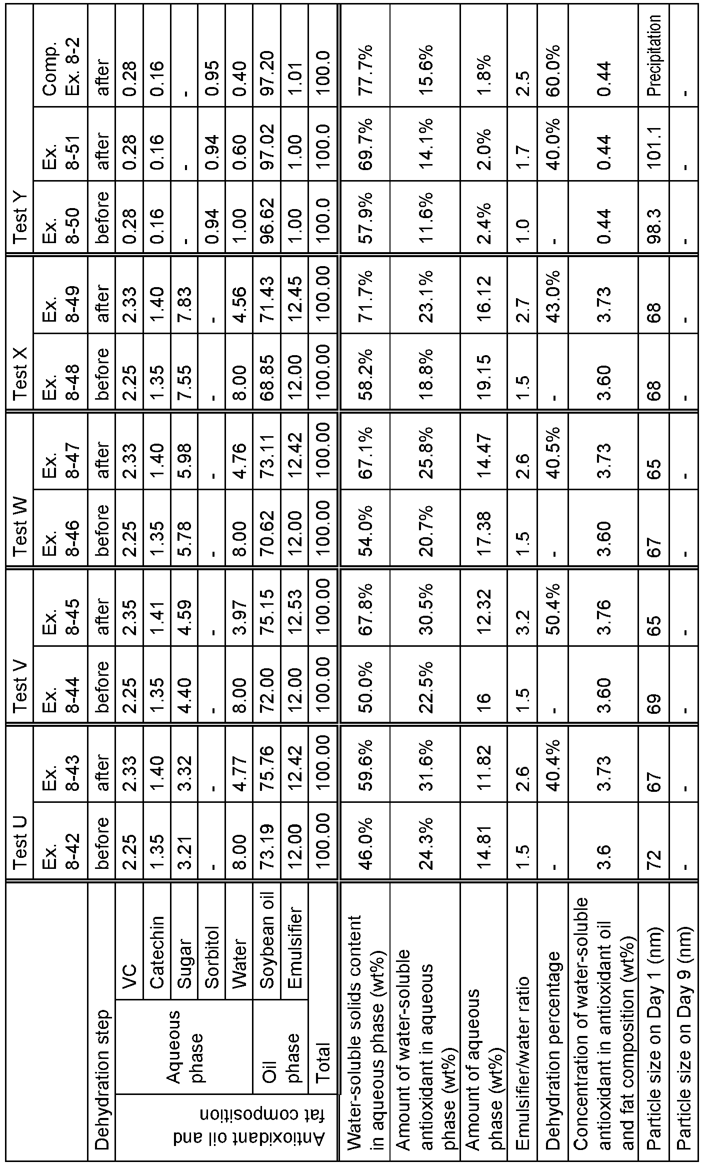

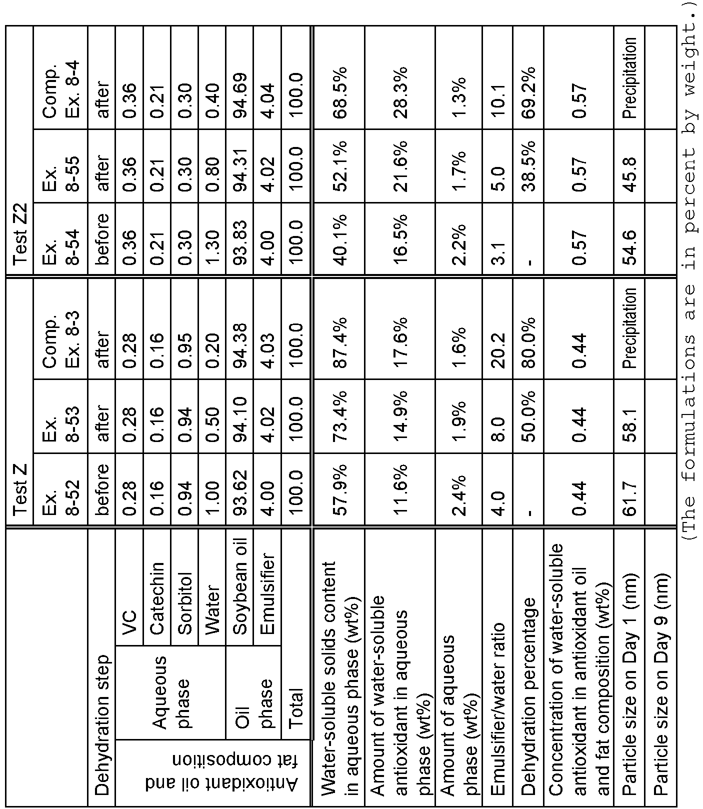

- For the VC, ascorbic acid was used.
- For the catechin, "Sunphenon 90S" produced by Taiyo Kagaku Co., Ltd. was used.
- For the soybean oil, soybean *sirasimeyu* (refined soybean oil) produced by Fuji Oil Co., Ltd. was used.
- For the emulsifier, a polyglycerol condensed ricinoleic acid ester "CRS-75" produced by Sakamoto Yakuhin Kogyo Co., Ltd. was used.
- Precipitation was not observed in all of the aqueous phase prepared in accordance with the formulations.

### Method for preparing an oil and fat composition (study 8)

1. The aqueous phase components shown in the formulations were dissolved by mixing to obtain an aqueous phase.
2. As shown in the formulations, the emulsifier was dissolved in oil and fat to obtain an oil phase.
3. The aqueous phase was introduced into the oil phase, and the mixture was mixed using a homomixer to obtain an emulsified liquid.
4. Further, emulsification was performed using a high-pressure homogenizer (37 MPa, 20 passes) to obtain a water-in-oil emulsified product.
5. Partial dehydration was performed with nitrogen aeration.

**Table 8-2: Results**

| | Test A | | Test B | | Test C | | Test D | | Test E | | |
|---|---|---|---|---|---|---|---|---|---|---|---|
| | Ex. 8-1 | Ex. 8-2 | Ex. 8-3 | Ex. 8-4 | Ex. 8-5 | Ex. 8-6 | Ex. 8-7 | Ex. 8-8 | Ex. 8-9 | Ex. 8-10 | |
| CDM value of control oil and fat | 5.5 | 5.5 | 5.5 | 5.5 | 5.5 | 5.5 | 5.5 | 5.5 | 5.5 | 5.5 | |
| CDM value of sample | 16.4 | 16.4 | 16.48 | 16.78 | - | 18.85 | - | 18.97 | 26.83 | 27.4 | |
| Sample/control | 3.0 | 3.0 | 3.0 | 3.1 | - | 3.4 | - | 3.4 | 4.9 | 5.0 | |

| | Test F | | Test G | | Test H | | Test I | | Test J | | |
|---|---|---|---|---|---|---|---|---|---|---|---|
| | Ex. 8-11 | Ex. 8-12 | Ex. 8-13 | Ex. 8-14 | Ex. 8-15 | Ex. 8-16 | Ex. 8-17 | Ex. 8-18 | Ex. 8-19 | Ex. 8-20 | Comp. Ex. 8-1 |
| CDM value of control oil and fat | 5.5 | 5.5 | 5.5 | 5.5 | 5.5 | 5.5 | 5.5 | 5.5 | 5.5 | 5.5 | 5.5 |
| CDM value of sample | - | 20.26 | - | 19.08 | 26.6 | 27.6 | 18.3 | 18.6 | - | 14.2 | - |
| Sample/control | - | 3.7 | - | 3.5 | 4.8 | 5.0 | 3.3 | 3.4 | - | 2.6 | - |

| | Test K | | Test L | | Test M | | Test N | | Test O | | |
|---|---|---|---|---|---|---|---|---|---|---|---|
| | Ex. 8-21 | Ex. 8-22 | Ex. 8-23 | Ex. 8-24 | Ex. 8-25 | Ex. 8-26 | Ex. 8-27 | Ex. 8-28 | Ex. 8-29 | Ex. 8-30 | |
| CDM value of control oil and fat | 5.5 | 5.5 | 5.5 | 5.5 | 5.5 | 5.5 | 5.5 | 5.5 | 5.5 | 5.5 | |
| CDM value of sample | 20.2 | 21.6 | 16.7 | 20 | 22.5 | 22.9 | 20.3 | 20.5 | 22.2 | 22.3 | |
| Sample/control | 3.7 | 3.9 | 3.0 | 3.6 | 4.1 | 4.2 | 3.7 | 3.7 | 4.0 | 4.1 | |

| | Test P | | Test Q | | | Test R | | Test S | | Test T | |
|---|---|---|---|---|---|---|---|---|---|---|---|
| | Ex. 8-31 | Ex. 8-32 | Ex. 8-33 | Ex. 8-34 | Ex. 8-35 | Ex. 8-36 | Ex. 8-37 | Ex. 8-38 | Ex. 8-39 | Ex. 8-40 | Ex. 8-41 |
| CDM value of control oil and fat | 5.5 | 5.5 | 5.5 | 5.5 | 5.5 | 5.5 | 5.5 | 5.5 | 5.5 | 5.5 | 5.5 |
| CDM value of sample | - | 17 | - | 16.3 | 17 | 18.1 | 20.2 | 21 | 19.1 | 23.3 | 23 |
| Sample/control | - | 3.1 | - | 3.0 | 3.1 | 3.3 | 3.7 | 3.8 | 3.5 | 4.2 | 4.2 |

| | Test U | | Test V | | Test W | | Test X | | Test Y | | |
|---|---|---|---|---|---|---|---|---|---|---|---|
| | Ex. 8-42 | Ex. 8-43 | Ex. 8-44 | Ex. 8-45 | Ex. 8-46 | Ex. 8-47 | Ex. 8-48 | Ex. 8-49 | Ex. 8-50 | Ex. 8-51 | Comp. Ex. 8-2 |
| CDM value of control oil and fat | 5.5 | 5.5 | 5.5 | 5.5 | 5.5 | 5.5 | 5.5 | 5.5 | 5.9 | 5.9 | 5.9 |
| CDM value of sample | 24.1 | 24.2 | 24.8 | 24.5 | 23.5 | 24.3 | 23.7 | 25.1 | 16.8 | 18.4 | - |
| Sample/control | 4.4 | 4.4 | 4.5 | 4.5 | 4.3 | 4.4 | 4.3 | 4.6 | 2.9 | 3.1 | - |

| | Test Z | | | Test Z2 | | | | | | | |
|---|---|---|---|---|---|---|---|---|---|---|---|
| | Ex. 8-52 | Ex. 8-53 | Comp. Ex. 8-3 | Ex. 8-54 | | Ex. 8-55 | | | Comp. Ex. 8-4 | | |
| CDM value of control oil and fat | 5.9 | 5.9 | 5.9 | 5.9 | | 5.9 | | | 5.9 | | |
| CDM value of sample | 22.0 | 23.2 | - | 22.7 | | 22.9 | | | - | | |
| Sample/control | 3.8 | 4.0 | - | 3.9 | | 3.9 | | | - | | |

### Discussion

- This study confirmed that appropriate partial dehydration achieved effects, such that the particle size was reduced, and the occurrence of precipitation was prevented with time. Moreover, there were cases in which antioxidative activity was improved as a result of dehydration.
- However, when dehydration was overly performed, an adverse effect could arise in terms of the occurrence of precipitation. For example, it was inappropriate to perform dehydration until the water in the antioxidant oil and fat composition became less than 0.5 wt%, as in Comparative Examples 8-2, 8-3, and 8-4, since precipitation occurred.

### Study 9: Confirmation of effects

The oil and fat compositions obtained in the present invention were compared in terms of antioxidative activity.

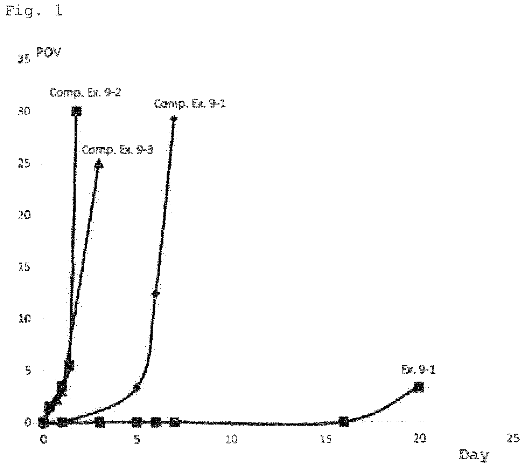

Table 9-1 shows the samples. The effect was confirmed based on the measurement of POV (peroxide value). The details of the evaluation were described below in the "Method of evaluation of oxidative stability based on POV (study 9)." Fig. 1 shows the results.

**Table 9-1: Sample details**

| | Comp. Ex. 9-1 | Comp. Ex. 9-2 | Comp. Ex. 9-3 | Ex. 9-1 |
|---|---|---|---|---|
| Soybean oil | 100 | 10 | 10 | - |
| PUFA oil | - | 90 | 89.98 | 90 |
| Sample of Ex. 5-10 | - | - | - | 10 |
| TBHQ | - | - | 0.02 | - |
| Total | 100 | 100 | 100 | 100 |

| | | | | |
|---|---|---|---|---|
| (The formulations are in percent by weight.) | | | | |

- For the PUFA oil, oil and fat containing EPA (19.8%) and DHA (45.4%) was used.

### Method of evaluation of oxidative stability based on POV (study 9)

1. Each of the oil and fat of the formulations shown in Table 9-1 was placed into a 50-ml glass bottle, and the bottle was covered with a lid, which was then placed into an incubator at 60°C, followed by stirring at 80 rpm.
2. Samples were taken at an appropriate time, and the peroxide value (POV) was measured. The POV was measured in accordance with the Standard methods for the analysis of fats, oils and related materials.

### Discussion

As shown in Fig. 1, when the oil and fat composition according to the present invention was used, the PUFA oil achieved a higher value in terms of the oxidative stability than that of soybean oil, and its antioxidative activity was more excellent than that of TBHQ, which is a synthetic antioxidant.

Due to its low oxidative stability, the use of PUFA oil was limited in many cases. However, it is presumed that the use of the oil and fat composition according to the present invention has made it possible to use PUFA oil in a manner similar to that of general-purpose oils and fats, such as soybean oil.

In this study, a sensory evaluation was also performed by a method in which an unpleasant odor was confirmed. Here as well, the occurrence of an unpleasant odor such as a fishy odor was greatly prevented in PUFA oil with which the oil and fat composition according to the present invention was used, indicating that general-purpose use was possible. Heretofore, fish oil etc. could have an unpleasant odor before the peroxide value actually increases, and for this reason, it was presumed that the occurrence of an unpleasant odor could be caused by a factor other than oxidation. However, the use of the oil and fat composition according to the present invention having overwhelmingly strong antioxidative activity prevented the occurrence of an unpleasant odor, which suggested that oxidation was the main cause of the occurrence of an unpleasant odor such as a fishy odor.

### Brief Description of Drawings

Fig. 1 is a graph showing the oxidation-preventing effect of the oil and fat composition according to the present invention.

## Claims

1. An antioxidant oil and fat composition in the form of water-in-oil emulsion
with a water content of 0.5 to 18 wt% comprising
an aqueous phase containing a water-soluble antioxidant in an amount of 2.5 to 65 wt%, and further containing a carbohydrate in an amount such that the aqueous phase has a total water-soluble solids content of 18 to 79 wt%,
wherein 1 to 38 wt% of the aqueous phase with a particle size of 300 nm or less is dispersed in an oil phase, and
wherein the oil phase contains PUFA oil, and
wherein the water-soluble antioxidant is at least one member selected from vitamin C, an amino acid, or catechin.

2. The antioxidant oil and fat composition according to claim 1,
wherein the oil phase contains at least one oil-soluble emulsifier selected from polyglycerol condensed ricinoleates, sugar esters, glycerol fatty acid esters, or lecithins, in an amount that is 0.7 to 9 times the weight amount of the water.

3. The antioxidant oil and fat composition according to claim 1,
wherein the amino acid is at least one member selected from glycine, glutamic acid, alanine, proline, lysine, tryptophan, methionine, valine, serine, histidine, isoleucine, leucine, phenylalanine, arginine, threonine, cysteine, aspartic acid, glutamine, or asparagine.

4. The antioxidant oil and fat composition according to any one of claims 1,2 or 3,
wherein the carbohydrate is at least one member selected from sugar alcohols, glucose, sucrose, dextrins, maltose, or oligosaccharides.

5. The antioxidant oil and fat composition according to any one of claims 1 to 4, comprising DHA and EPA in a total amount of 0.1 to 60 wt%.

6. A method for producing an antioxidant oil and fat composition, the method comprising the following steps of:
1: preparing an aqueous phase containing a water-soluble antioxidant in an amount of 2.5 to 65 wt%, and further containing a carbohydrate in an amount such that the aqueous phase has a total water-soluble solids content of 18 to 79 wt%; and
2: dispersing the aqueous phase in an oil phase such that the percentage of the aqueous phase becomes 1 to 38 wt% with a particle size of 300 nm or less to obtain an antioxidant oil and fat composition with a water content of 0.5 to 18 wt%, then mixing and emulsifying the oil phase and the aqueous phase to give an antioxidant oil and fat composition in the form of water-in-oil emulsion,
wherein the oil phase contains *PUFA* oil, and
wherein the water-soluble antioxidant is at least one member selected from vitamin C, an amino acid, or catechin.

7. The production method according to claim 6,
the method comprising the step of adding, to the oil phase, at least one oil-soluble emulsifier selected from polyglycerol condensed ricinoleates, sugar esters, glycerol fatty acid esters, or lecithins, in an amount that is 0.7 to 9 times the weight amount of the water contained in the antioxidant oil and fat composition.

8. The production method according to claim 6,
wherein the amino acid is at least one member selected from glycine, glutamic acid, alanine, proline, lysine, tryptophan, methionine, valine, serine, histidine, isoleucine, leucine, phenylalanine, arginine, threonine, cysteine, aspartic acid, glutamine, or asparagine.

9. The production method according to claim 6,
wherein the carbohydrate is at least one member selected from sugar alcohols, glucose, sucrose, dextrins, maltose, or oligosaccharides.

10. The production method according to claim 7,
wherein the carbohydrate is at least one member selected from sugar alcohols, glucose, sucrose, dextrins, maltose, or oligosaccharides.

11. The production method according to claim 8,
wherein the carbohydrate is at least one member selected from sugar alcohols, glucose, sucrose, dextrins, maltose, or oligosaccharides.

12. A method for producing an antioxidant oil and fat composition,
the method comprising the step of dehydrating 12 to 76 wt% of water from the antioxidant oil and fat composition obtained by the production method of any one of claims 6 to 11 to obtain an antioxidant oil and fat composition with a water content of 0.5 to 18 wt%.

## Patentansprüche

1. Antioxidative Öl- und Fettzusammensetzung in Form einer Wasser-in-ÖI-Emulsion
mit einem Wassergehalt von 0,5 bis 18 Gew.-%, umfassend
eine wässrige Phase, die ein wasserlösliches Antioxidans in einer Menge von 2,5 bis 65 Gew.-% enthält und ferner ein Kohlenhydrat in einer derartigen Menge enthält, dass die wässrige Phase einen Gesamtgehalt von wasserlöslichen Feststoffen von 18 bis 79 Gew.-% aufweist,
wobei 1 bis 38 Gew.-% der wässrigen Phase mit einer Teilchengröße von 300 nm oder weniger in einer Ölphase dispergiert sind und
wobei die Ölphase PUFA-Öl enthält und
wobei das wasserlösliche Antioxidans mindestens ein Element ist, das ausgewählt ist aus Vitamin C, einer Aminosäure oder Catechin.

2. Antioxidative Öl- und Fettzusammensetzung nach Anspruch 1,
wobei die Ölphase mindestens einen öllöslichen Emulgator, der ausgewählt ist aus Polyglycerin-kondensierten Riconoleaten, Zuckerestern, Glycerin-Fettsäureestern oder Lecithinen, in einer Menge, die 0,7 bis 9 Mal das Gewicht des Wassers ist, enthält.

3. Antioxidative Öl- und Fettzusammensetzung nach Anspruch 1,
wobei die Aminosäure mindestens ein Element ist, das ausgewählt ist aus Glycin, Glutaminsäure, Alanin, Prolin, Lysin, Tryptophan, Methionin, Valin, Serin, Histidin, Isoleucin, Leucin, Phenylalanin, Arginin, Threonin, Cystein, Asparaginsäure, Glutamin oder Asparagin.

4. Antioxidative Öl- und Fettzusammensetzung nach einem der Ansprüche 1, 2 oder 3,
wobei das Kohlenhydrat mindestens ein Element ist, das ausgewählt ist aus Zuckeralkoholen, Glucose, Saccharose, Dextrinen, Maltose oder Oligosacchariden.

5. Antioxidative Öl- und Fettzusammensetzung nach einem der Ansprüche 1 bis 4, umfassend DHA und EPA in einer Gesamtmenge von 0,1 bis 60 Gew.-%.

6. Verfahren zum Herstellen einer antioxidativen Öl- und Fettzusammensetzung, wobei das Verfahren die folgenden Schritte umfasst:
1: Herstellen einer wässrigen Phase, die ein wasserlösliches Antioxidans in einer Menge von 2,5 bis 65 Gew.-% enthält und ferner ein Kohlenhydrat in einer derartigen Menge enthält, dass die wässrige Phase einen Gesamtgehalt von wasserlöslichen Feststoffen von 18 bis 79 Gew.-% aufweist; und
2: Dispergieren der wässrigen Phase in einer Ölphase, sodass der prozentuale Anteil der wässrigen Phase zu 1 bis 38 Gew.-% mit einer Teilchengröße von 300 nm oder weniger wird, um eine antioxidative Öl- und Fettzusammensetzung mit einem Wassergehalt von 0,5 bis 18 Gew.-% zu erhalten, dann Mischen und Emulgieren der Ölphase und der wässrigen Phase, um eine antioxidative Öl- und Fettzusammensetzung in Form einer Wasser-in-Öl-Emulsion zu ergeben,
wobei die Ölphase *PUFA-*Öl enthält und
wobei das wasserlösliche Antioxidans mindestens ein Element ist, das ausgewählt ist aus Vitamin C, einer Aminosäure oder Catechin.

7. Herstellungsverfahren nach Anspruch 6,
wobei das Verfahren den Schritt des Hinzufügens, zu der Ölphase, mindestens eines öllöslichen Emulgators, der ausgewählt ist aus Polyglycerin-kondensierten Riconoleaten, Zuckerestern, Glycerin-Fettsäureestern oder Lecithinen, in einer Menge, die 0,7 bis 9 Mal das Gewicht des Wassers, das in der antioxidativen Öl- und Fettzusammensetzung enthalten ist, umfasst.

8. Herstellungsverfahren nach Anspruch 6,
wobei die Aminosäure mindestens ein Element ist, das ausgewählt ist aus Glycin, Glutaminsäure, Alanin, Prolin, Lysin, Tryptophan, Methionin, Valin, Serin, Histidin, Isoleucin, Leucin, Phenylalanin, Arginin, Threonin, Cystein, Asparaginsäure, Glutamin oder Asparagin.

9. Herstellungsverfahren nach Anspruch 6,
wobei das Kohlenhydrat mindestens ein Element ist, das ausgewählt ist aus Zuckeralkoholen, Glucose, Saccharose, Dextrinen, Maltose oder Oligosacchariden.

10. Herstellungsverfahren nach Anspruch 7,
wobei das Kohlenhydrat mindestens ein Element ist, das ausgewählt ist aus Zuckeralkoholen, Glucose, Saccharose, Dextrinen, Maltose oder Oligosacchariden.

11. Herstellungsverfahren nach Anspruch 8,
wobei das Kohlenhydrat mindestens ein Element ist, das ausgewählt ist aus Zuckeralkoholen, Glucose, Saccharose, Dextrinen, Maltose oder Oligosacchariden.

12. Verfahren zum Herstellen einer antioxidativen Öl- und Fettzusammensetzung,
wobei das Verfahren den Schritt des Dehydrierens von 12 bis 76 Gew.-% Wasser aus der antioxidativen Öl- und Fettzusammensetzung, die durch das Herstellungsverfahren nach einem der Ansprüche 6 bis 11 erhalten wird, umfasst, um eine antioxidative Öl- und Fettzusammensetzung mit einem Wassergehalt von 0,5 bis 18 Gew.-% zu erhalten.

## Revendications

1. Composition d'huile et de graisse antioxydante se présentant sous la forme d'une émulsion eau dans huile
avec une teneur en eau de 0,5 à 18 % en poids comprenant
une phase aqueuse contenant un antioxydant soluble dans l'eau en une quantité de 2,5 à 65 % en poids, et contenant en outre un hydrate de carbone en une quantité telle que la phase aqueuse présente une teneur totale en solides solubles dans l'eau de 18 à 79 % en poids,
dans laquelle 1 à 38 % en poids de la phase aqueuse d'une taille de particule de 300 nm ou moins est dispersée dans une phase d'huile, et
dans laquelle la phase d'huile contient de l'huile AGPI, et
dans laquelle l'antioxydant soluble dans l'eau est au moins un élément sélectionné parmi la vitamine C, un acide aminé ou la catéchine.

2. Composition d'huile et de graisse antioxydante selon la revendication 1,
dans laquelle la phase d'huile contient au moins un émulsifiant soluble dans l'huile sélectionné parmi des ricinoléates condensés de polyglycérol, des esters de sucre, des esters d'acides gras de glycérol ou des lécithines, en une quantité qui fait de 0,7 à 9 fois la quantité en poids de l'eau.

3. Composition d'huile et de graisse antioxydante selon la revendication 1,
dans laquelle l'acide aminé est au moins un élément sélectionné parmi la glycine, l'acide glutamique, l'alanine, la proline, la lysine, le tryptophane, la méthionine, la valine, la sérine, l'histidine, l'isoleucine, la leucine, la phénylalanine, l'arginine, la thréonine, la cystéine, l'acide aspartique, la glutamine ou l'asparagine.

4. Composition d'huile et de graisse antioxydante selon l'une quelconque des revendications 1, 2 ou 3,
dans laquelle l'hydrate de carbone est au moins un élément sélectionné parmi les alcools de sucre, le glucose, le sucrose, les dextrines, le maltose ou les oligosaccharides.

5. Composition d'huile et de graisse antioxydante selon l'une quelconque des revendications 1 à 4, comprenant du DHA et de l'EPA en une quantité totale de 0,1 à 60 % en poids.

6. Procédé de production d'une composition d'huile et de graisse antioxydante, le procédé comprenant les étapes suivantes consistant à :
1 : préparer une phase aqueuse contenant un antioxydant soluble dans l'eau en une quantité de 2,5 à 65 % en poids, et contenant en outre un hydrate de carbone en une quantité telle que la phase aqueuse présente une teneur totale en solides solubles dans l'eau de 18 à 79 % en poids ; et
2 : disperser la phase aqueuse dans une phase d'huile de telle sorte que le pourcentage de la phase aqueuse devienne 1 à 38 % en poids avec une taille de particule de 300 nm ou moins pour obtenir une composition d'huile et de graisse antioxydante avec une teneur en eau de 0,5 à 18 % en poids, puis mélanger et émulsionner la phase d'huile et la phase aqueuse pour donner une composition d'huile et de graisse antioxydante se présentant sous la forme d'une émulsion eau dans huile,
dans lequel la phase d'huile contient de l'huile *AGPI,* et
dans lequel l'antioxydant soluble dans l'eau est au moins un élément sélectionné parmi la vitamine C, un acide aminé ou la catéchine.

7. Procédé de production selon la revendication 6,
le procédé comprenant l'étape consistant à ajouter, à la phase d'huile, au moins un émulsifiant soluble dans l'huile sélectionné parmi des ricinoléates condensés de polyglycérol, des esters de sucre, des esters d'acides gras de glycérol ou des lécithines, en une quantité qui fait de 0,7 à 9 fois la quantité en poids de l'eau contenue dans la composition d'huile et de graisse antioxydante.

8. Procédé de production selon la revendication 6,
dans lequel l'acide aminé est au moins un élément sélectionné parmi la glycine, l'acide glutamique, l'alanine, la proline, la lysine, le tryptophane, la méthionine, la valine, la sérine, l'histidine, l'isoleucine, la leucine, la phénylalanine, l'arginine, la thréonine, la cystéine, l'acide aspartique, la glutamine ou l'asparagine.

9. Procédé de production selon la revendication 6,
dans lequel l'hydrate de carbone est au moins un élément sélectionné parmi les alcools de sucre, le glucose, le sucrose, les dextrines, le maltose ou les oligosaccharides.

10. Procédé de production selon la revendication 7,
dans lequel l'hydrate de carbone est au moins un élément sélectionné parmi les alcools de sucre, le glucose, le sucrose, les dextrines, le maltose ou les oligosaccharides.

11. Procédé de production selon la revendication 8,
dans lequel l'hydrate de carbone est au moins un élément sélectionné parmi les alcools de sucre, le glucose, le sucrose, les dextrines, le maltose ou les oligosaccharides.

12. Procédé de production d'une composition d'huile et de graisse antioxydante,
le procédé comprenant l'étape consistant à déshydrater 12 à 76 % en poids d'eau de la composition d'huile et de graisse antioxydante obtenue par le procédé de production selon l'une quelconque des revendications 6 à 11 afin d'obtenir une composition d'huile et de graisse antioxydante avec une teneur en eau de 0,5 à 18 % en poids.
